# EUROPEAN PATENT APPLICATION

(11) **EP 4 817 939 A1**
(43) Date of publication of application: **07.10.2026**
(21) Application number: 26165551.8
(22) Date of filing: 17.03.2026
(51) Int. Cl.: B60L 53/14, B60L 53/30, B60L 53/31

(54) **CHARGING TERMINAL AND CHARGING INDICATION METHOD**

(30) Priority: 03.04.2025 CN 202510421106
(71) Applicant: HUAWEI TECHNOLOGIES CO., LTD., Shenzhen 518129 (CN)
(72) Inventor: HE, Tao, Shenzhen, 518129 (CN); TIAN, Pingrong, Shenzhen, 518129 (CN); LI, Mingda, Shenzhen, 518129 (CN); HUANG, Lejun, Shenzhen, 518129 (CN)
(74) Representative: Gill Jennings & Every LLP

(57) **Abstract**

Embodiments of this application provide a charging terminal and a charging indication method. The charging terminal includes a top light and at least one charging connector. The top light is mounted at the top of the charging terminal, so that the top light is visible around the terminal. The top light may indicate different statuses of the charging terminal by using different light-emitting colors, including the following cases: When the charging terminal is available and has an idle charging connector, the top light is white. When the charging terminal is available but all charging connectors are occupied, the top light is blue. When the charging terminal is unavailable, the top light is red. The top light has a wide visibility range. A user may observe the top light from various angles to learn of a status of the charging terminal. In addition, a light-emitting status of the top light is simple, facilitating understanding by the user.

## Description

### TECHNICAL FIELD

This application relates to the charging field, and in particular, to a charging terminal and a charging indication method.

### BACKGROUND

A charging terminal (which may also be referred to as a charging pile) at a public charging station may provide a charging service for a new energy vehicle (vehicle for short). However, when a charging user searches for a charging pile at the public charging station for charging, it is difficult to identify a status of the charging terminal.

In some solutions, an indicator is disposed on a side surface of the charging terminal, and the status of the charging terminal may be fed back based on a light-emitting status of the indicator. For example, the indicator being red indicates that the charging terminal is unavailable, and the indicator being green indicates that the charging terminal has an idle charging connector. However, a mounting position of the indicator is inappropriate, leading to a large blind area when the charging user observes the indicator, and causing difficulty in observation. It is still difficult to identify the status of the charging terminal. For example, it is difficult to clearly identify the light-emitting status of the indicator at a position away from the charging terminal or at a position at which the indicator is beyond a field of view. Consequently, the user needs to drive to a short distance or even drive around to observe indicators one by one. This takes time and effort, and is likely to cause congestion.

To sum up, how to better provide a charging indication for the charging user is worth discussing.

### SUMMARY

Embodiments of this application provide a charging terminal and a charging indication method, to improve charging indication efficiency.

According to a first aspect, an embodiment of this application provides a charging terminal. The charging terminal includes a top light and at least one charging connector. The top light is located at the top of the charging terminal. An illumination direction of the top light includes a first direction and a second direction. The first direction is an orientation of a first side surface of the charging terminal. The second direction is an orientation of a second side surface of the charging terminal. A charging connector holder of the charging connector is disposed on the first side surface. The second side surface includes one or more side surfaces different from the first side surface. The top light is configured to indicate a status of the charging terminal, including: When the charging terminal is available for charging and has an unoccupied charging connector, the top light is in a first color or is off. When the charging terminal is available for charging but all charging connectors are occupied, the top light is in a second color. When the charging terminal is unavailable for charging, the top light is in a third color or the second color. That a charging connector is occupied includes: The charging connector is plugged into a charging port of a vehicle, or the charging connector is in a charging socket but the charging connector is reserved for charging. That the charging terminal is unavailable for charging includes: The charging terminal is faulty, the charging terminal is being upgraded, or the charging terminal is in self-check.

In the foregoing embodiment, the top light is mounted at the top of the charging terminal. In comparison with a solution in which an indicator is mounted on a single side surface, a visibility range of the top light can be increased. A user may observe the top light from around the top light or from a long distance, to better learn of the status of the charging terminal that is indicated by the top light. In addition, the top light has a few types of light-emitting statuses, facilitating memorization by a charging user. In addition, the status of the charging terminal that is indicated by the top light covers a necessary status that the charging user needs to obtain. An illumination function of the top light may be used to illuminate the charging terminal at night or when light is poor, to enable the charging user to find the charging terminal. When the charging user selects, from the charging terminal, an idle charging connector for charging, the illumination function of the top light further helps the charging user observe a functional port in the charging terminal, to reduce a risk of misoperation. In the foregoing embodiment, an example of the first color may be white in a specific embodiment, an example of the second color may be blue in a specific embodiment, and an example of the third color may be red in a specific embodiment. Certainly, in addition to the combination of white, blue, and red, another color combination may alternatively be used, provided that the color combination conforms to a way of thinking of the user. For example, the first color is white, the second color is yellow, and the third color is red.

With reference to the first aspect, in some embodiments, when the charging terminal is available for charging and has an unoccupied charging connector, if ambient light intensity is less than preset intensity, the top light is in the first color; or when the charging terminal is available for charging and has an unoccupied charging connector, if the ambient light intensity is greater than or equal to the preset intensity, the top light is off.

In the foregoing embodiment, the top light of the charging terminal is turned on only when an ambient light condition is poor, to reduce power consumption. In addition, when the first color is white, a status of the top light that is off appears similar to a light-emitting status of the top light that is white. This is user-friendly. The user can quickly understand that, when the top light of the charging terminal is off, the charging terminal is available for charging.

With reference to the first aspect, in some embodiments, the charging terminal further includes a side indicator, and the side indicator is mounted on the first side surface. The side indicator is configured to indicate a status of the charging terminal, including: When the charging terminal is available for charging and has an unoccupied charging connector, the side indicator is in a fourth color; when the charging terminal is available for charging but all the charging connectors are occupied, the side indicator is in the second color; or when the charging terminal is unavailable for charging, the side indicator is in the third color or the second color.

In the foregoing embodiment, when the charging terminal is available for charging but all the charging connectors are occupied, or when the charging terminal is unavailable for charging, the side indicator and the top light are in a same color, to implement compatibility with a light-emitting status of the top light. When the charging terminal is available for charging and has an idle charging connector, the side indicator is green. This is compatible with a light-emitting status of the top light, to indicate, to the charging user, that the charging connector is idle and available, and further compensates for poor visibility in bad weather, for example, heavy fog, when the top light is white.

With reference to the first aspect, in some embodiments, the at least one charging connector includes a first charging connector, and the charging terminal further includes a charging connector holder and a connector holder light that correspond to the first charging connector. The connector holder light is mounted on the charging connector holder. The charging connector holder is configured to fasten the first charging connector. The connector holder light is configured to indicate a status of the first charging connector, including: When the first charging connector is not occupied, the connector holder light is in the first color or the fourth color; when the first charging connector is occupied, the connector holder light is in the second color or the fourth color; or when the first charging connector is unavailable for charging, the connector holder light is in the third color or the second color.

In the foregoing embodiment, a light-emitting color of the connector holder light is highly compatible with that of the top light. If the charging terminal further includes the side indicator, light-emitting colors of the three indicators are also unified.

With reference to the first aspect, in some embodiments, the connector holder light is specifically configured to: when the first charging connector is not reserved, be in different light-emitting statuses in different stages from a stage in which the first charging connector is in the charging connector holder to a stage in which the first charging connector is removed from the charging connector holder and then to a stage before the first charging connector is plugged into the charging port of the vehicle, where light-emitting colors of the connector holder light in all of the different light-emitting statuses are the first color. The different stages include at least two of the following: a stage in which the first charging connector is the charging connector holder and is not selected, a stage in which the first charging connector is in the charging connector holder and is selected, and a stage in which the first charging connector is removed from the charging connector holder and is not plugged into the charging port of the vehicle. A difference between light-emitting statuses includes a difference in at least one of the following: on/off duration, an on/off area, and an on/off position.

In the foregoing embodiment, switching, by a charging connector, to different stages when the charging connector is idle is usually triggered based on a charging operation of the user for the charging connector. Switching between stages is indicated by a change in a light-emitting mode of a connector holder light, and the light-emitting mode of the connector holder light may be observed by the charging user. The change in the light-emitting mode of the connector holder light also indicates a response of the charging terminal to the charging operation.

With reference to the first aspect, in some embodiments, being in the different light-emitting statuses in the different stages from the stage in which the first charging connector is in the charging connector holder to the stage in which the first charging connector is removed from the charging connector holder and then to the stage before the first charging connector is plugged into the charging port of the vehicle specifically includes: being in a first light-emitting status in the stage in which the first charging connector is in the charging connector holder and is not selected; switching from the first light-emitting status to a second light-emitting status when the first charging connector switches to the stage in which the first charging connector is in the charging connector holder and is selected; and switching from the second light-emitting status to a third light-emitting status when the first charging connector switches to the stage in which the first charging connector is removed from the charging connector holder and is not plugged into the charging port of the vehicle.

For examples of the first light-emitting status, the second light-emitting status, and the third light-emitting status in the foregoing embodiment, refer to content indicated by a number 2 to a number 4 respectively in Table 2 in a specific embodiment.

With reference to the first aspect, in some embodiments, the first light-emitting status is the same as the light-emitting status of the top light.

In the foregoing embodiment, when a charging connector is in a charging connector holder and is not reserved or selected, a light-emitting status of a connector holder light and the light-emitting status of the top light may be unified, for example, both are steady white in a specific embodiment.

With reference to the first aspect, in some embodiments, the connector holder light is specifically configured to: be in the fourth color when the first charging connector is plugged into the charging port of the vehicle and is in a first charging mode; or be in the second color when the first charging connector is plugged into the charging port of the vehicle and is not in the first charging mode.

In the foregoing embodiment, the first charging mode may be a scheduled charging mode or an energy-saving charging mode in a specific embodiment, and the fourth color may be green in a specific embodiment. In this case, being in green may also indicate that the first charging mode is an energy-saving and environmentally friendly charging mode. In this way, the charging user can feel that the charging terminal is more environmentally friendly and energy-saving during charging.

With reference to the first aspect, in some embodiments, when the first charging connector is plugged into the charging port of the vehicle and is not in the first charging mode, a light-emitting status of the connector holder light is the same as the light-emitting status of the top light.

In the foregoing embodiment, when a charging connector is plugged into the charging port of the vehicle and is not in the first charging mode, a light-emitting status of a connector holder light and the light-emitting status of the top light may be unified, for example, both are steady blue in a specific embodiment.

With reference to the first aspect, in some embodiments, the charging terminal includes a screen, and the charging terminal is configured to: if determining that a logged-in user is an operation and maintenance user, display first prompt information on the screen when the first charging connector is plugged into the charging port of the vehicle and is not in the first charging mode, where different first prompt information is displayed in different stages. The different stages include at least one of the following: The first charging connector is plugged into the charging port of the vehicle and has not entered a charging mode; the first charging connector enters a second charging mode; and the first charging connector exits the second charging mode and is not removed from the charging port of the vehicle.

In the foregoing embodiment, the first prompt information may be determined based on a light-emitting periodicity field in a binary light control code a. The binary light control code a is used to: when a charging connector is plugged into the charging port of the vehicle and is not in the first charging mode, control light-emitting statuses of the charging connector in different stages. The light-emitting periodicity field is reused to obtain the first prompt information, to provide a more detailed indication for the operation and maintenance user without additionally increasing internal data of the charging terminal.

With reference to the first aspect, in some embodiments, the connector holder light is specifically configured to: be in different light-emitting statuses in different stages from a stage in which the first charging connector is removed from the charging port of the vehicle to a stage before the first charging connector is plugged back into the connector holder.

In the foregoing embodiment, different light-emitting statuses may be presented, to notify the user of duration after a charging connector is removed.

With reference to the first aspect, in some embodiments, being in the different light-emitting statuses in the different stages from the stage in which the first charging connector is removed from the charging port of the vehicle to the stage before the first charging connector is plugged back into the connector holder specifically includes: being in the first color in a stage in which the first charging connector is removed from the charging port of the vehicle and is not plugged into the charging connector holder within preset time; or being in the fourth color in a stage in which the first charging connector is removed from the charging port of the vehicle and is not plugged into the charging connector holder after the preset time.

In the foregoing embodiment, if a charging connector is not plugged back into a charging connector holder within the preset time (for example, 60s or 50s) after the charging connector is removed, a light-emitting color may be switched to notify the user that the charging connector needs to be plugged back as soon as possible.

With reference to the first aspect, in some embodiments, when the charging terminal is unavailable for charging, the light-emitting status of the connector holder light and a light-emitting status of the side indicator are the same as the light-emitting status of the top light.

In the foregoing embodiment, when the charging terminal is unavailable for charging, the light-emitting status of the connector holder light and the light-emitting status of the top light may be unified, for example, both are steady red in a specific embodiment.

With reference to the first aspect, in some embodiments, the charging terminal is configured to:
when the charging terminal is unavailable for charging and the logged-in user is the operation and maintenance user, display second prompt information on the screen, where the second prompt information indicates a reason why the charging terminal is unavailable for charging.

In the foregoing embodiment, the second prompt information may be determined based on a light-emitting periodicity field in a binary light control code b. The binary light control code b is used to control a light-emitting status of a charging connector when the charging terminal is unavailable. For different reasons, content of the light-emitting periodicity field in the binary light control code b varies. The light-emitting periodicity field is reused to obtain the second prompt information, to provide a more detailed indication for the operation and maintenance user without additionally increasing internal data of the charging terminal. This facilitates maintenance of the charging terminal.

With reference to the first aspect, in some embodiments, the screen is further configured to display third prompt information, to indicate an operation that the user is allowed to perform in the status of the charging terminal that is indicated by the top light.

In the foregoing embodiment, when the first color is white, the second color is blue, and the third color is red, an example of the third prompt information may be "Light:Red:Stop;White:Charge;Blue:Wait", to notify the user that "red light indicates that charging is stopped, white light indicates that charging is in progress, and blue light indicates waiting".

With reference to the first aspect, in some embodiments, the top light is located above the top or at a position near an edge of the top, and the position near the edge of the top includes a position spaced away from the edge of the top by less than a first threshold.

With reference to the first aspect, in some embodiments, the top light is mounted above and around the top of the charging terminal.

In the foregoing embodiment, the top light is mounted at the top of the charging terminal, without occupying other important space of the charging terminal. This helps maintain compactness and appealing appearance of the charging terminal.

According to a second aspect, an embodiment of this application provides a charging indication method, applied to a charging terminal. The method includes:
when the charging terminal is available for charging and the charging terminal has an unoccupied charging connector, controlling a top light of the charging terminal to be in a first color or be off, where the top light is located at the top of the charging terminal, an illumination direction of the top light includes a first direction and a second direction, the first direction is an orientation of a first side surface of the charging terminal, the second direction is an orientation of a second side surface of the charging terminal, a charging connector holder of the charging connector is disposed on the first side surface, and the second side surface includes one or more side surfaces different from the first side surface; when the charging terminal is available for charging and all charging connectors in the charging terminal are occupied, controlling the top light to be in a second color, where that a charging connector is occupied includes: the charging connector is plugged into a charging port of a vehicle, or the charging connector is in a charging socket but the charging connector is reserved for charging; or when the charging terminal is unavailable, controlling the top light to be in a third color or the second color, where that the charging terminal is unavailable for charging includes: the charging terminal is faulty, the charging terminal is being upgraded, or the charging terminal is in self-check.

With reference to the second aspect, in some embodiments, the method further includes: when the charging terminal is available for charging and has an unoccupied charging connector, if ambient light intensity is less than preset intensity, controlling the top light to be in the first color; or when the charging terminal is available for charging and has an unoccupied charging connector, if the ambient light intensity is greater than or equal to the preset intensity, controlling the top light to be off.

With reference to the second aspect, in some embodiments, the method further includes: when the charging terminal is available for charging and has an unoccupied charging connector, controlling a side indicator of the charging terminal to be in a fourth color, where the side indicator is mounted on a side surface of the charging terminal; when the charging terminal is available for charging but all the charging connectors in the charging terminal are occupied, controlling the side indicator to be in the second color; or when the charging terminal is unavailable for charging, the side indicator is in the third color or the second color.

With reference to the second aspect, in some embodiments, the charging connectors of the charging terminal include a first charging connector, and the method further includes: when the first charging connector is not occupied, controlling a connector holder light corresponding to the first charging connector to be in the first color or the fourth color, where the connector holder light is mounted on a charging connector holder of the charging terminal, and the charging connector holder is configured to fasten the first charging connector; when the first charging connector is occupied, controlling the connector holder light to be in the second color or the fourth color; or when the first charging connector is unavailable for charging, controlling the connector holder light to be in the third color or the second color.

With reference to the second aspect, in some embodiments, the method further includes: when the first charging connector is not reserved, controlling the first connector holder light to be in different light-emitting statuses in different stages from a stage in which the first charging connector is in the charging connector holder to a stage in which the first charging connector is removed from the charging connector holder and then to a stage before the first charging connector is plugged into the charging port of the vehicle, where light-emitting colors of the connector holder light in all of the different light-emitting statuses are the first color. The different stages include at least two of the following: a stage in which the first charging connector is the charging connector holder and is not selected, a stage in which the first charging connector is in the charging connector holder and is selected, and a stage in which the first charging connector is removed from the charging connector holder and is not plugged into the charging port of the vehicle. A difference between light-emitting statuses includes a difference in at least one of the following: on/off duration, an on/off area, and an on/off position.

With reference to the second aspect, in some embodiments, when the first charging connector is not reserved, controlling the first connector holder light to be in the different light-emitting statuses in the different stages from the stage in which the first charging connector is in the charging connector holder to the stage in which the first charging connector is removed from the charging connector holder and then to the stage before the first charging connector is plugged into the charging port of the vehicle specifically includes: controlling the first connector holder light to be in a first light-emitting status in the stage in which the first charging connector is in the charging connector holder and is not selected; controlling the first connector holder light to switch from the first light-emitting status to a second light-emitting status when the first charging connector switches to the stage in which the first charging connector is in the charging connector holder and is selected; and controlling the first connector holder light to switch from the second light-emitting status to a third light-emitting status when the first charging connector switches to the stage in which the first charging connector is removed from the charging connector holder and is not plugged into the charging port of the vehicle.

With reference to the second aspect, in some embodiments, the method further includes: controlling the first charging connector to be in the fourth color when the first charging connector is plugged into the charging port of the vehicle and is in a first charging mode; or controlling the first charging connector to be in the second color when the first charging connector is plugged into the charging port of the vehicle and is not in the first charging mode.

With reference to the second aspect, in some embodiments, the method further includes: if it is determined that a logged-in user is an operation and maintenance user, displaying first prompt information on a screen of the terminal when the first charging connector is plugged into the charging port of the vehicle and is not in the first charging mode, where different first prompt information is displayed in different stages. The different stages include at least one of the following: The first charging connector is plugged into the charging port of the vehicle and has not entered a charging mode; the first charging connector enters a second charging mode; and the first charging connector exits the second charging mode and is not removed from the charging port of the vehicle.

With reference to the second aspect, in some embodiments, the method further includes: controlling the first connector holder light to be in different light-emitting statuses in different stages from a stage in which the first charging connector is removed from the charging port of the vehicle to a stage before the first charging connector is plugged back into the connector holder.

With reference to the second aspect, in some embodiments, the method further includes: controlling the first connector holder light to be in the different light-emitting statuses in the different stages from the stage in which the first charging connector is removed from the charging port of the vehicle to the stage before the first charging connector is plugged back into the connector holder specifically includes: controlling the first connector holder light to be in the first color in a stage in which the first charging connector is removed from the charging port of the vehicle and is not plugged into the charging connector holder within preset time; or controlling the first connector holder light to be in the fourth color in a stage in which the first charging connector is removed from the charging port of the vehicle and is not plugged into the charging connector holder after the preset time.

With reference to the second aspect, in some embodiments, the method further includes: when the charging terminal is unavailable for charging and the logged-in user is the operation and maintenance user, displaying second prompt information on the screen, where the second prompt information indicates a reason why the charging terminal is unavailable for charging.

With reference to the second aspect, in some embodiments, the method further includes: displaying third prompt information on the screen, to indicate an operation that the user is allowed to perform in a status of the charging terminal that is indicated by the top light.

For other beneficial effects that can be achieved by implementing the charging indication method provided in the second aspect, refer to the descriptions of the charging terminal in the first aspect. Details are not described herein again.

### BRIEF DESCRIPTION OF DRAWINGS

FIG. 1A(1), FIG. 1A(2) and FIG. 1B show an example charging terminal according to an embodiment of this application;
FIG. 2 shows an example scenario in which a charging terminal is used;
FIG. 3 shows an example light control code according to an embodiment of this application;
FIG. 4A to FIG. 4C show light-emitting status switching logic of indicators;
FIG. 5 shows an example charging system in which a charging terminal is used;
FIG. 6 is a diagram of interaction performed when a charging terminal collaboratively controls a plurality of indicators;
FIG. 7A to FIG. 7C are a diagram of an interaction process performed when a charging terminal provides indications for different users;
FIG. 8(1) to FIG. 8(4) show example user interfaces displayed when a user interacts with a charging terminal;
FIG. 9A to FIG. 9D are an example flowchart of providing, by a charging terminal, an indication for a user based on indicators; and
FIG. 10(1) to FIG. 10(4) are a diagram of a layout of a charging host and a charging terminal.

### DESCRIPTION OF EMBODIMENTS

To better provide a charging indication for a user, embodiments of this application provide a charging terminal and a charging indication method applicable to the charging terminal.

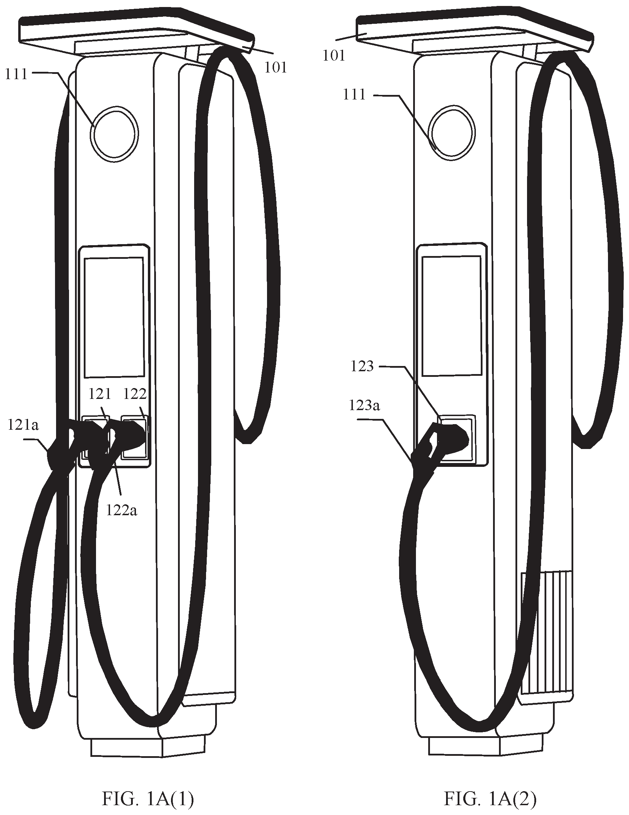

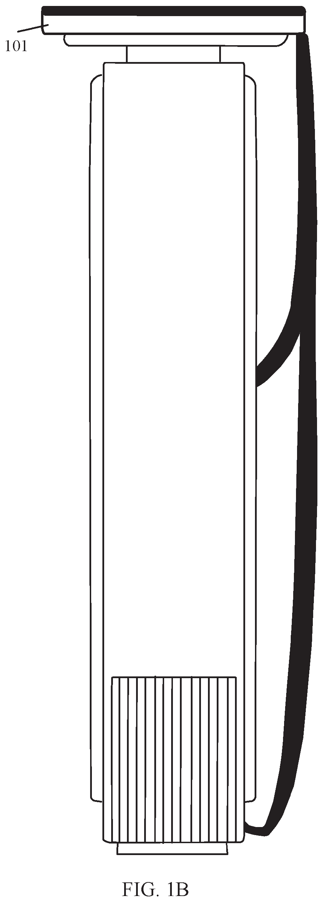

First, the charging terminal provided in embodiments of this application is described with reference to FIG. FIG. 1A1(), (FIG. 1A 2) and FIG. 1B. FIG. 1A(1) and FIG. 1A(2) are a diagram of the charging terminal in one direction, and FIG. 1B is a diagram of the charging terminal in another direction.

The charging terminal includes a top light and at least one charging connector. The top light is mounted at the top of the charging terminal, so that the top light is visible around the terminal. As shown in FIG. 1A(1) and FIG. 1A(2), the top light (for example, a top light 101) may be mounted above and around the top of the charging terminal.

The top light is configured to indicate a status of the charging terminal. The status of the charging terminal includes: The charging terminal is available for charging (briefly referred to as that the charging terminal is available), and the charging terminal is unavailable for charging (briefly referred to as that the charging terminal is unavailable).

In some possible cases, that the charging terminal is unavailable means that the charging terminal provides no service for a charging user and is faulty, being repaired, being upgraded, or in self-check, or a charging connector is in a sequence number setting stage. That the charging terminal is available means that the charging terminal provides a service for the charging user and can be used by the charging user. That the charging terminal is available includes: The charging terminal has an idle charging connector and is available for charging a vehicle; or all charging connectors in the charging terminal are occupied, and the charging terminal waits until there is an idle charging connector, and then is available for charging a vehicle. That the charging connector is in the sequence number setting stage means that a number is allocated to each charging connector in the charging terminal before the charging terminal is put into operation, where the number may serve as an identifier of the charging connector to identify the charging connector.

That a charging connector is occupied includes: The charging connector is plugged into a charging port of a vehicle, or the charging connector is in a charging socket but is reserved for charging.

That a charging connector is idle includes: The charging connector is not plugged into a charging port of a vehicle and is not reserved for charging. In embodiments of this application, being idle may also be understood as being unoccupied.

The top light may indicate different statuses of the charging terminal by using different light-emitting colors, including the following cases: When the charging terminal is available and has an idle charging connector, the top light is white. When the charging terminal is available but all charging connectors are occupied, the top light is blue. When the charging terminal is unavailable, the top light is red or blue.

When the charging terminal is unavailable, the top light emits light in one of the following three modes: The top light is red only, the top light is blue only, and the top light is blue in some scenarios and is blue in other scenarios. For example, when the charging terminal is unavailable, if it takes a long time to recover to an available state, the top light may be red; or when the charging terminal is unavailable, if it takes a short time to recover to an available state, the top light may be blue. Alternatively, division may be performed based on another indicator. This is not limited in embodiments of this application.

The top light is further configured to illuminate the charging terminal when emitting light in a color, to improve visibility of the charging terminal.

An illumination direction of the top light includes a direction 1 and a direction 2. The direction 1 is an orientation of a side surface 1 of the charging terminal. The direction 2 is an orientation of a side surface 2 of the charging terminal. A charging connector holder of a charging connector is disposed on the side surface 1. The side surface 2 includes one or more side surfaces different from the side surface 1. Herein, it should be noted that the top light may not be arranged above a side surface that does not need to be illuminated by the top light. For example, when the top light is mounted against a wall, the top light does not need to be arranged above a side surface that is in contact with the wall. In this case, the top light only needs to surround side surfaces that are not in contact with the wall.

Still as shown in FIG. 1A(1) and FIG. 1A(2), to improve illumination effect of the top light for the charging terminal, a periphery of the top light (for example, a top light 101) may be larger than a periphery of the top of the charging terminal. This may also be understood as that a projection of the top light on a horizontal plane may encircle a projection of the top of the charging terminal on the horizontal plane.

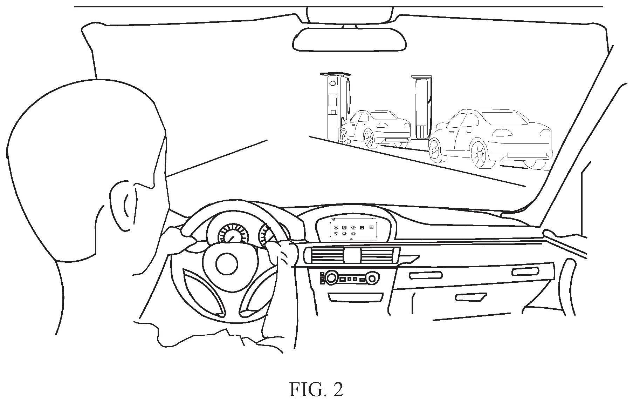

The top light has a wide visibility range. The charging user may observe the top light from various angles to learn of the status of the charging terminal. For example, as shown in FIG. 1B, the charging user can still observe the top light 101 from the rear of the charging terminal. If the charging user sees, from the rear of the charging terminal, that the top light is red, the charging user can learn that the charging terminal is unavailable, and does not need to go to the front of the charging terminal to check whether the charging terminal is available, to save time and energy. As shown in FIG. 2, that the top light has a wide visibility range is further manifested as follows: Even at a position away from the charging terminal, the charging user can still quickly learn of the status of the charging terminal, to plan a vehicle travel path in advance and drive to a charging terminal with an idle charging connector, to avoid blind searching.

In addition, an illumination function of the top light can enable the charging user to learn of the status of the charging terminal based on the top light even at night or in an environment with poor light. For example, the top light being white indicates that the charging terminal has an idle charging connector. Being white is implemented by emitting white light by the top light, to illuminate the charging terminal at night or when light is poor. When the charging user selects, from the charging terminal, an idle charging connector for charging, the illumination function of the top light further helps the charging user observe a functional port in the charging terminal, to reduce a risk of misoperation. In addition, the top light is mounted at the top of the charging terminal, without occupying other important space of the charging terminal. This helps maintain compactness and appealing appearance of the charging terminal.

To reduce energy consumption, when the charging terminal is available and has an idle charging connector, the top light is white only when ambient light intensity is less than preset intensity, to illuminate the charging terminal in a dark environment. When the charging terminal is available and has an idle charging connector, if the ambient light intensity is greater than or equal to the preset intensity, the top light may be off.

Herein, it should be noted that, in addition to the foregoing manner in which the top light is mounted above and around the top of the charging terminal, the top light may alternatively be mounted in another manner, provided that the foregoing illumination function and a function of providing an indication that is visible all around can be implemented. This is not limited in embodiments of this application. For example, the top light may alternatively be mounted around an edge of the top of the charging terminal and parallel to a side surface of the charging terminal. To sum up, in some possible implementations, the top light may be specifically located above the top or at a position near the edge of the top, and the position near the edge of the top includes a position spaced away from the edge of the top by less than a distance threshold 1 (for example, any value ranging from 0 m to 0.5 m). Herein, the edge of the top includes an intersection line between each side surface of the charging terminal and the top of the charging terminal.

To make appearance of the charging terminal more unified, a shape of the top light may be the same as or similar to a shape of the periphery of the top of the charging terminal. For example, if the periphery of the top of the charging terminal is in a square shape, the top light may also be in a square shape.

In some possible implementations, to more comprehensively provide an indication for the charging user, in addition to the top light, the charging terminal may further include a side indicator. The side indicator is mounted on the side surface 1 of the charging terminal. As shown in FIG. 1A(1) and FIG. 1A(2), an example side indicator is provided, and is denoted as a star ring light 111. Herein, an example in which the side indicator is in a ring shape is used for description. In an actual case, a shape of the side indicator is not limited, and the side indicator may be in a square shape, a strip shape, or another shape.

Consistent with the top light, the side indicator is also used to indicate the status of the charging terminal, including: When the charging terminal is available and has an idle charging connector, the side indicator is green. When the charging terminal is available but all the charging connectors are occupied, the side indicator is blue. When the charging terminal is unavailable, the side indicator is red or blue.

It should be noted that a scenario in which the side indicator is red or blue when the charging terminal is unavailable is the same as a scenario of the top light, to unify light-emitting statuses of the side indicator and the top light.

When the charging terminal is available but all the charging connectors are occupied, or when the charging terminal is unavailable, the side indicator and the top light are in a same color, to implement compatibility with a light-emitting status of the top light. When the charging terminal is available and has an idle charging connector, the side indicator is green. This is compatible with a light-emitting status of the top light, to indicate, to the charging user, that the charging connector is idle and available, and further compensates for poor visibility in bad weather, for example, heavy fog, when the top light is white.

In the foregoing content, the light-emitting statuses of the top light and the side indicator indicate an overall status of the charging terminal. To indicate a local status of the charging terminal, and specifically, indicate a status of a charging connector in the charging terminal, in addition to the top light, the charging terminal may further include a connector holder light corresponding to each charging connector. A connector holder light corresponding to a charging connector is mounted on a charging connector holder (referred to as a connector holder for short) corresponding to the charging connector. For example, as shown in FIG. 1A(1) and FIG. 1A(2), an example charging terminal shown in FIG. 1A(1) includes two charging connectors: a charging connector 121a and a charging connector 122a. The charging connector 121a corresponds to a connector holder light 121 that may be configured to specifically indicate a status of the charging connector 121a. The charging connector 122a corresponds to a connector holder light 122, and the connector holder light 122 may be configured to specifically indicate a status of the charging connector 122a. Still as shown in FIG. 1A(1) and FIG. 1A(2), an example charging terminal shown in FIG. 1A(2) includes one charging connector, denoted as a charging connector 123a. The charging connector 123a corresponds to a connector holder light 123, and the connector holder light 123 may be configured to specifically indicate a status of the charging connector 123a. A status of a charging connector includes: The charging connector is idle, the charging connector is occupied, and the charging connector is unavailable. That the charging connector is unavailable includes: The charging connector is unavailable because the charging terminal is unavailable, or the charging connector is unavailable due to a fault of the charging connector or the like.

The charging connectors of the charging terminal include a charging connector 1, a charging connector holder corresponding to the charging connector 1 is denoted as a connector holder 1, and a connector holder light corresponding to the charging connector 1 is denoted as a connector holder light 1. The connector holder light 1 is mounted on the connector holder 1, and the connector holder 1 is configured to fasten the charging connector 1.

The connector holder light 1 is configured to indicate a status of the charging connector 1, including: When the charging connector 1 is idle, the connector holder light 1 is white or green. When the charging connector 1 is occupied, the connector holder light 1 is blue or green. When the charging connector 1 is unavailable, the connector holder light 1 is red or blue.

It should be noted that a scenario in which the connector holder light is red or blue when the charging connector is unavailable because the charging terminal is unavailable is the same as a scenario in which the top light is red or blue, to align light-emitting statuses of the three indicators.

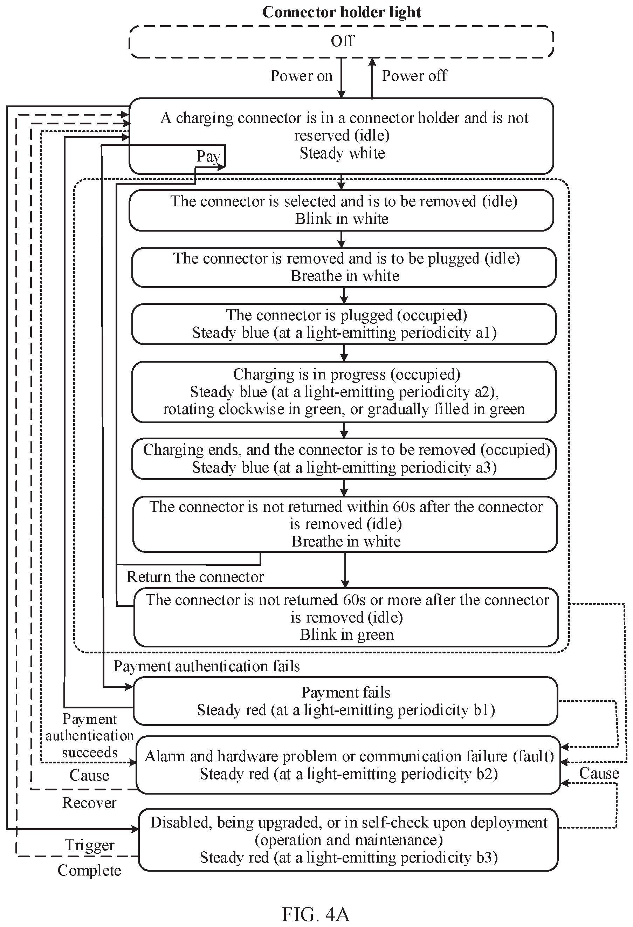

The light-emitting status of the top light changes simply, and usually changes only in a light-emitting color, so that the charging user can directly and quickly learn of the status of the charging terminal based on the light-emitting color of the top light. In some possible cases, in comparison with the top light, in addition to indicating a status by using a light-emitting color, the side indicator and/or the connector holder light may further switch another light-emitting parameter when emitting light in a color, to change a light-emitting status of the side indicator and/or a light-emitting status of the connector holder light, to provide detailed information of the status indicated by the light-emitting color. Detailed information of a status includes but is not limited to at least one of the following: a cause of the status and different stages obtained through division based on the status. That a charging connector is occupied may be divided into a plurality of stages, for example, charging in an energy-saving mode and charging in a scheduled mode. For specific descriptions of this part of content, refer to the following descriptions of FIG. 4A to FIG. 4C and related content thereof. Details are not described herein.

Herein, it should be noted that, in addition to a light-emitting color, a light-emitting parameter for controlling a light-emitting status of an indicator (including the side indicator, the connector holder light, and the top light) may further include at least one of other light-emitting parameters: a light-emitting type, a light-emitting mode, a light-emitting periodicity, a light-emitting ratio, and the like. For details, refer to the following Table 1.

**Table 1**

| Light-emitting parameter | Value: meaning |
|---|---|
| Light-emitting type | 0: all. All light beads in the indicator are on. |
| | 1: left. In the indicator, all light beads on the left can emit light, and all light beads on the right are off. |
| | 2: right. In the indicator, all light beads on the right can emit light, and all light beads on the left are off. |
| Light-emitting color | 0: white |
| | 1: red |
| | 2: green |
| | 3: blue |
| | 4: orange |
| | 5: yellow |
| | 6: cyan |
| | 7: purple |
| Light-emitting mode | 0: steady on. A light bead, in the indicator, that can emit light is continuously on without blinking. |
| | 1: breathing. Within a light-emitting periodicity, a light bead, in the indicator, that can emit light is gradually turned on and gradually turned off at a constant speed. |
| | 2: blinking uniformly (blinking for short). Within a light-emitting periodicity, on duration of a light bead, in the indicator, that can emit light is equal to off duration of the light bead. |
| | 3: steady on and blinking fast. Within a light-emitting periodicity, on duration of a light bead, in the indicator, that can emit light is longer than off duration of the light bead. For example, within a light-emitting periodicity of 3s or more, the off duration is 0.5s. |
| | 4: rotating clockwise. Within a light-emitting periodicity, light beads, in the indicator, that can emit light are sequentially turned on and turned off, and the indicator blinks with effect similar to rotation of a clock hand. |
| | 5: gradually filled. Within a light-emitting periodicity, all light beads, in the indicator, that can emit light are sequentially turned on, and a specific proportion of light beads are turned on at a time. For example, 5% of all the light beads are turned on. |
| Light-emitting periodicity | K1 (for example, 4000, 2000, 1000, or 250) ms: time needed for completing an on/off change in a light-emitting mode. The indicator cyclically performs the on/off change based on the light-emitting periodicity, to present the light-emitting mode. |
| Light-emitting ratio | K2% (for example, 1% or 5%): K2% of light beads, in the indicator, that can emit light are turned on. For example, if the indicator has 20 light beads and K2 is 5, one light bead is turned on, and the other 19 light beads are off. |

In the light-emitting types shown in Table 1, the light beads on the left and the light beads on the right are not intended to indicate light beads at specific positions in the indicator, and are merely intended for distinguishing. The light beads on the left indicate a part of light beads in the indicator, and the light beads on the right indicate another part of light beads in the indicator.

Based on the example light-emitting modes shown in Table 1, it can be learned that a change in a light-emitting status of the indicator in a light-emitting mode is implemented by a change in an on/off status of the indicator, including a change in on/off duration, an on/off area, an on/off position, or the like of the indicator.

In embodiments of this application, unless otherwise specified, the light-emitting type is 0 by default. This also means that the light-emitting ratio is 100%.

Based on the foregoing content, it can be learned that the light-emitting status of the top light changes simply, and usually changes only in a light-emitting color. An implementation includes: The top light emits light in a color in a steady-on mode. In the steady-on mode, impact of the light-emitting periodicity on the light-emitting status of the top light is eliminated, to avoid a case that the top light is turned off for a short period of time and then enters a next light-emitting periodicity because a light-emitting periodicity ends. Instead, the top light is continuously on when the light-emitting color does not change, or is off due to sufficient illumination when emitting light in white.

To be compatible with the light-emitting status of the top light, the side indicator also emits light in a color in a steady-on mode. Impact of the light-emitting periodicity on the light-emitting status is eliminated. Usually, the side indicator also presents only a change in a light-emitting color to the user. In addition, to provide detailed information of a status indicated by the light-emitting color, when emitting light in a color in the steady-on mode, the side indicator may further change a light-emitting periodicity, to provide more detailed information by changing the light-emitting periodicity. In the steady-on mode, the light-emitting periodicity is not indicated by the side indicator from an optical perspective. Therefore, the charging user is not aware of the light-emitting periodicity, and sees only the light-emitting color of the side indicator. However, from a data perspective, when determining that a logged-in user is an operation and maintenance user, the charging terminal may visualize the light-emitting periodicity, to obtain prompt information. For example, the prompt information obtained based on the light-emitting periodicity is displayed on a screen, to enable the operation and maintenance user to further learn of the status of the charging terminal based on the prompt information. For example, when emitting light in red when the charging terminal is unavailable, the side indicator may indicate a specific reason why the charging terminal is unavailable by switching the light-emitting periodicity. For example, the side indicator being steady red at a light-emitting periodicity of 1s may indicate that the charging terminal is unavailable due to a fault. The side indicator being steady red at a light-emitting periodicity of 1s indicates that the side indicator is red in the steady-on mode at a light-emitting periodicity of 1s.

Further, when emitting light in a color, the connector holder light may further present more light-emitting statuses by switching the light-emitting periodicity and/or the light-emitting mode, to provide more detailed information of a status of the charging connector. For example light-emitting statuses of the connector holder light, refer to the following Table 2.

**Table 2**

| Number | Status of the charging connector | Specific stage | Light-emitting status | Code |
|---|---|---|---|---|
| 1 | The charging connector is occupied. | The charging connector is in a connector holder but is reserved. | Steady blue at a light-emitting periodicity of 1s | 0xA03 |
| 2 | The charging connector is idle (not reserved). | The charging connector is in the connector holder and is not reserved. | Steady white at a light-emitting periodicity of 1s | 0xA00 |
| 3 | | The charging connector is selected for charging but is not removed from the connector holder. | Blinking in white at a light-emitting periodicity of 0.5s | 0x520 |
| 4 | | The charging connector is removed from the connector holder and is not plugged into the charging port of the vehicle. | Breathing in white at a light-emitting periodicity of 2s | 0x1410 |
| 5 | The charging connector is occupied. | The charging connector is plugged into the charging port of the vehicle and is in a stage of handshaking with the vehicle to establish a link. | Steady blue at a light-emitting periodicity of 2s | 0x1403 |
| 6 | | The charging connector is plugged into the charging port of the vehicle, has established a link to the vehicle, has not started charging, and is not reserved for charging. | Steady blue at a light-emitting periodicity of 3s | 0x1E03 |
| 7 | | The charging connector is plugged into the charging port of the vehicle, has established a link to the vehicle, and is reserved for charging. | Steady blue at a light-emitting periodicity of 6s | 0x3C03 |
| 8 | | Charging is being performed in a non-scheduled and non-energy- | Steady blue at a light-emitting periodicity of | 0x2803 |
| | | saving charging mode. | 4s | |
| 9 | | Charging is being performed in a scheduled charging mode. | Rotating clockwise in green at a light-emitting periodicity of 5s | 0x3242 |
| 10 | | Charging is being performed in an energy-saving charging mode. | Gradually filled in green at a light-emitting periodicity of 5s | 0x3252 |
| 11 | | The charging connector exits a charging mode to end charging when the vehicle is not fully charged, but is not removed from the charging port of the vehicle. | Steady blue at a light-emitting periodicity of 5s | 0x3203 |
| 12 | | The charging connector exits a charging mode to end charging after the vehicle is fully charged, but is not removed from the charging port of the vehicle. | Steady blue at a light-emitting periodicity of 7s | 0x4603 |
| 13 | The charging connector is idle. | The charging connector is being removed from the charging port of the vehicle. | Breathing in white at a light-emitting periodicity of 5s | 0x3210 |
| 14 | | The charging connector is not plugged into the connector holder within 60s after being removed from the charging port of the vehicle. | Breathing in white at a light-emitting periodicity of 3s | 0x1E10 |
| 15 | | The charging connector is not plugged into the connector holder 60s after being removed from the charging port of the vehicle. | Blinking in green at a light-emitting periodicity of 0.5s | 0x522 |
| 16 | The charging connector is unavailable. | A fault or an alarm occurs when the charging terminal is in use. The fault includes a hardware problem. | Steady red at a light-emitting periodicity of 1s | 0xA01 |
| 17 | | The charging terminal is being upgraded. | Steady red at a light-emitting periodicity of 2s | 0x1401 |
| | | (Operation and maintenance) | | |
| 18 | | The charging terminal is in self-check. An occasion of the self-check includes: The charging terminal performs self-check after being powered on for the first time. (Operation and maintenance) | Steady red at a light-emitting periodicity of 3s | 0x1E01 |
| 19 | | An indicator on the charging terminal is subject to a communication failure. | Steady red at a light-emitting periodicity of 4s | 0x2801 |
| 20 | | Communication between the charging terminal and a charging host fails. | Steady red at a light-emitting periodicity of 5s | 0x3201 |
| 21 | | The charging terminal is disabled, including: The charging terminal is disabled during parameter setting. | Steady red at a light-emitting periodicity of 6s | 0x3C01 |
| | | (Operation and maintenance) | | |
| 22 | | Payment fails. | Steady red at a light-emitting periodicity of 7s | 0x4601 |
| 23 | | The charging connector is in a sequence number setting stage before the charging terminal is put into operation. | Blinking in blue at a light-emitting periodicity of 0.5s | 0x523 |
| | | (Operation and maintenance) | | |
| 24 | A fuel vehicle occupies a position. | The vehicle is a fuel vehicle. | Blinking in both orange and red at a light-emitting periodicity of 1s | 0xA24 |
| ... | ... | ... | ... | ... |

In embodiments of this application, the connector holder light may present light-emitting statuses in different ranges for different types of users. A reason lies in that different types of users trigger different user operations by using the charging terminal. For different types of users, the charging terminal needs to handle user operations in different ranges, and the charging terminal enters different statuses when handling different user operations. This triggers different light-emitting statuses of the connector holder light.

A user type and an operation triggered by the user type include but are not limited to at least one of the following:
1. The charging user triggers a charging operation, to charge a vehicle by using the charging terminal. Different charging operations may trigger the connector holder light to present different light-emitting statuses.
2. The operation and maintenance user triggers an operation and maintenance operation and a charging operation, and may maintain the charging terminal. In addition, the operation and maintenance user may also charge a vehicle by using the charging terminal, to determine whether the charging terminal is normal. Different charging operations and maintenance operations may trigger the connector holder light to present different light-emitting statuses.
3. An operation user may trigger a part or all of operation and maintenance operations and a part or all of charging operations.

For example, the light-emitting statuses indicated by the number 17, the number 18, the number 19, and the number 21 in Table 2 are triggered by operation and maintenance operations performed by the operation and maintenance user on the charging terminal, and cannot be triggered by the charging user by using the charging terminal. The light-emitting statuses indicated by the number 1 to the number 15, the number 22, and the number 23 in Table 2 may be triggered by charging operations performed by the operation and maintenance user or the charging user on the charging terminal.

In addition, the charging terminal may enter an unavailable state due to a fault during running, without being triggered by a user. In this case, faults due to different causes may also trigger the connector holder light to present different light-emitting statuses. In some examples, the content indicated by the number 16, the number 19, and the number 20 in Table 2 can be learned.

Herein, it should be noted that there is a correspondence between the charging connector, the connector holder light, and the connector holder in Table 2, which may be the charging connector 1, the connector holder light 1, and the connector holder 1 in the foregoing descriptions respectively.

As shown in Table 2, it can be learned that the connector holder light being white or green indicates that the charging connector is idle. Based on the content indicated by the number 2 to the number 4 in Table 2, after the charging terminal is put into operation, the charging connector may be idle when the charging connector is not reserved and before the charging connector is plugged into the charging port of the vehicle. In this case, based on a user operation, the charging connector may be in different stages when the charging connector is idle, and the connector holder light may present different light-emitting statuses in different stages, to indicate detailed information when the charging connector is idle. Herein, the different stages include but are not limited to the stages indicated by the number 2 to the number 4 in Table 2, and include: a stage in which the charging connector is in the connector holder and is not selected, a stage in which the charging connector is in the connector holder and is selected, and a stage in which the charging connector is removed from the connector holder and is not plugged into the charging port of the vehicle.

Switching, by the charging connector, to different stages when the charging connector is idle is triggered based on a charging operation of a user for the charging connector. Switching between stages is indicated by a change in a light-emitting mode of the connector holder light, and the light-emitting mode of the connector holder light may be observed by the charging user. The change in the light-emitting mode of the connector holder light also indicates a response of the charging terminal to the charging operation. For example, refer to the content indicated by the number 2 and the number 3. After the user selects the charging connector, the light-emitting mode of the connector holder light changes from being steady on to blinking. When the user sees the change, the user can know that the connector is successfully selected and a subsequent charging operation can be performed. The correspondence between the charging operation and the light-emitting mode makes the charging terminal more intelligent and friendly. To make a change in a light-emitting status of the connector holder light clearer, in addition to switching the light-emitting mode, switching, by the charging connector, to different stages when the charging connector is idle may further include switching a light-emitting periodicity.

Still as shown in Table 2, it can be learned that the connector holder light being blue or green indicates that the charging connector is occupied. Refer to the content indicated by the number 9 and the number 10. When the charging connector is in the scheduled charging mode or the energy-saving charging mode, the connector holder light is green. In this way, the charging user can feel that the charging terminal is more environmentally friendly and energy-saving during charging. Refer to the content indicated by the number 1, the number 5 to the number 8, the number 11, and the number 12. When the charging connector is occupied but is not in the scheduled charging mode or the energy-saving charging mode, the connector holder light is blue. After the charging connector is reserved and the charging connector is plugged into the charging port of the vehicle, the connector holder light may be blue in a steady-on mode, to indicate that the charging connector is occupied for a long time.

Still refer to the content indicated by the number 5 to the number 8, the number 11, and the number 12 in Table 2. After the charging connector is plugged into the port of the vehicle, first, the charging connector does not enter a charging mode. The charging connector may enter a charging mode (not the scheduled charging mode or the energy-saving charging mode) for charging only after undergoing a handshake and link establishment process and the like, and the charging connector exits the charging mode after charging ends. The charging connector may be steady blue at different light-emitting periodicities in different stages from a stage in which the charging connector is plugged into the charging port of the vehicle to a stage in which the charging connector exits the charging mode (not the scheduled charging mode or the energy-saving charging mode). It can be learned from the foregoing content that, after the charging connector is plugged into the port of the vehicle, the connector holder light is blue in the steady-on mode. Impact of the light-emitting periodicity on the light-emitting status of the connector holder light can be eliminated, and the charging user sees only the state of being steady blue. The light-emitting periodicity is used for the charging terminal to visualize the light-emitting periodicity when determining that the logged-in user is the operation and maintenance user, to obtain prompt information. In this way, the operation and maintenance user further learns of the status of the charging terminal based on the prompt information, so that the operation and maintenance user can maintain the charging terminal. This design is also friendly to the charging user. The charging connector entering different charging states is a result of a charging process performed by the charging connector, and is not caused by a charging operation of the charging user. Therefore, the user is enabled to feel only that the connector holder light is steady blue, to avoid confusion of the user. Otherwise, if the light-emitting mode also changes, for example, if the connector holder light is steady blue during handshaking and link establishment (as indicated by the number 5) and the light-emitting mode of the connector holder light switches from the steady-on mode to breathing after a link is established but charging has not started (as indicated by the number 6), the connector holder light, as seen by the user, is not steady blue, but breathes in blue. In this case, the user may wonder why the light-emitting status of the connector holder light changes from being steady blue to blinking in blue while the user performs no operation on the charging connector, and may wonder if a problem has occurred.

Refer to the number 14 and the number 15 in Table 2. The connector holder light may also present different light-emitting statuses in different stages from a stage in which the charging connector is removed from the charging port of the vehicle to a stage before the charging connector is plugged back into the connector holder light. For example, as indicated by the number 14, the connector holder light is white in a stage in which the charging connector is not plugged into the charging connector holder within 60s after being removed from the charging port of the vehicle. As indicated by the number 15, the connector holder light is green in a stage in which the charging connector is not plugged into the charging connector holder 60s or more after being removed from the charging port of the vehicle. A change in a color is clear to the charging user, to better notify the charging user that the charging connector is not returned for a long time and the charging connector needs to be plugged into the connector holder as soon as possible. Still refer to the content indicated by the number 14 and the number 15. To make a change in the light-emitting status of the connector holder light clearer, in addition to switching the light-emitting color, switching, by the connector holder light, to different stages when the charging connector is idle may further include switching a light-emitting mode. Refer to the number 13 and the number 14. During removal of the charging connector, in the case of switching to a period within 60s after the charging connector is removed, the connector holder light may indicate, by switching a light-emitting periodicity, that a removal stage of the charging connector has changed.

Still refer to the content indicated by the number 16 to the number 22 in Table 2. It can be learned that, when the charging connector is unavailable, the connector holder light may be red in the steady-on mode. In this way, the user can be more clearly notified that the charging connector is unavailable and operations are prohibited. The connector holder light may alternatively be red at different light-emitting periodicities, to indicate a reason why the connector holder light is unavailable. In addition, in the steady-on mode, a light-emitting periodicity is invisible to the charging user, and is visible to the operation and maintenance user. When determining that the logged-in user is the operation and maintenance user, the charging terminal visualizes a code of the light-emitting periodicity. In this way, the operation and maintenance user further learns of, based on the code, a reason why the charging terminal or the charging connector is unavailable, so that the operation and maintenance user can maintain the charging terminal or the charging connector.

In some other possible scenarios, the connector holder light is not red, and the charging connector may indicate, by using a blue color, that the charging terminal is unavailable, for example, in the foregoing scenario in which the charging connector is in the sequence number setting stage before the charging terminal is put into operation. It should be noted that, in this case, the top light and the side indicator are also blue, for example, may be blue in the steady-on mode.

Herein, it should be noted that, in addition to the connector holder light being idle, the connector holder light being occupied, and the connector holder light being unavailable, a status that can be indicated by the connector holder light may further include other statuses. For example, refer to the content indicated by the number 24 in Table 2. When detecting an event that a fuel vehicle occupies a position, the charging terminal may enable the connector holder light to blink in both orange and red at a light-emitting periodicity of 1s, to notify the user that a vehicle in a charging space is a fuel vehicle and the vehicle should be driven away from the charging space.

It should be further noted that the changes in the light-emitting parameters during status switching, the types of the light-emitting modes (for example, blinking, breathing, and rotating clockwise), the duration of the light-emitting periodicities (for example, 0.5s and 1s), and 60s shown in Table 2 are examples for description, and should not constitute a limitation on embodiments of this application. In an actual case, the content may be replaced with another type of light-emitting mode and/or a light-emitting periodicity of other duration, provided that status switching can be indicated. This is not limited in embodiments of this application.

A code in Table 2 is a hexadecimal (0x) light control code corresponding to a light-emitting status. The hexadecimal light control code may be viewed by the operation and maintenance user to learn of the status of the charging terminal. The hexadecimal light control code may be obtained based on a binary light control code corresponding to the light-emitting status. The binary light control codes may be recorded in a message frame received by the connector holder light, and is specifically recorded in a data field of the message frame. The message frame may be an RTU-MODBUS message frame. The message frame may be generated by a charging control board connected to the connector holder light, and transmitted to the connector holder light. The connector holder light parses the data field in the message frame, and converts the data field into a corresponding electrical signal, to control the light-emitting status.

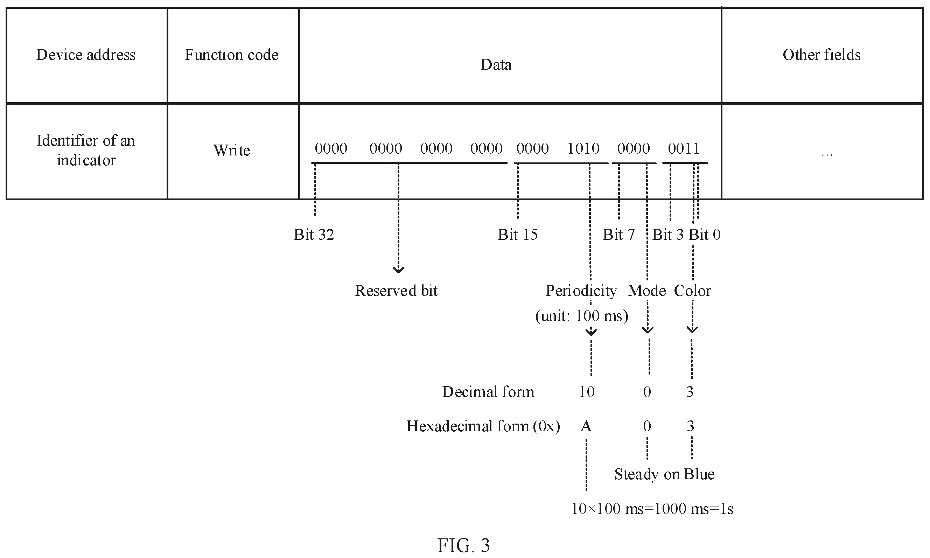

Refer to an example message frame shown in FIG. 3, in addition to a data field, the message frame may further include a device address field, a function code field, and other fields. The device address field is used to record an identifier of an indicator, and is used to determine an indicator that is to respond to the message frame. The function code field is used to specify an operation type, including a read operation and a write operation. The other fields may include a least significant field, a most significant field, a check field, and the like. This is not limited in embodiments of this application.

Still as shown in FIG. 3, an example in which a length of the data field is 32 bits is used for description. A bit 0 to a bit 3 in the data field are used to record a light-emitting color. A bit 4 to a bit 7 in the data field are used to record a light-emitting mode. A bit 8 to a bit 15 in the data field are used to record a light-emitting periodicity. Other bytes (a bit 16 to a bit 31) in the data field may be used as reserved bits.

Each character in a hexadecimal light control code corresponds to four consecutive characters in a binary light control code. A least significant character in the hexadecimal light control code records a light-emitting color, and corresponds to a bit 0 to a bit 3 in the binary light control code. A second least significant character in the hexadecimal light control code records a light-emitting mode, and corresponds to a bit 4 to a bit 7 in the binary light control code. Two characters after the second least significant character in the hexadecimal light control code record a light-emitting periodicity, and correspond to a bit 8 to a bit 15 in the binary light control code. For example, the binary light control code shown in FIG. 3 is converted into a hexadecimal light control code (0x)A03. The bit 0 to the bit 3 (0011) in the binary light control code correspond to 3 in a hexadecimal form and 3 in a decimal form. As shown in Table 1, 3 (in the decimal form) in the light-emitting color indicates blue. The bit 4 to the bit 7 (0000) in the binary light control code correspond to 0 in a hexadecimal form and 0 in a decimal form. As shown in Table 1, 0 (in the decimal form) in the light-emitting mode indicates steady on. The bit 8 to the bit 15 (0000 1010) in the binary light control code correspond to 0A (a most significant bit 0 is omitted and denoted as A) in a hexadecimal form and 10 in a decimal form. When a unit of the light-emitting periodicity is 100 ms, 10 indicates that the light-emitting periodicity is 1s (10×100 ms=1000 ms=1s). The content in FIG. 3 and Table 2 is described by using an example in which the unit of the light-emitting periodicity is 100 ms. In practice, the unit of the light-emitting periodicity may alternatively be another value, for example, 1s or 50 ms. This is not limited in embodiments of this application.

In FIG. 3, the hexadecimal light control code (0xA03) indicated by the number 1 in Table 2 is used as an example for description. For descriptions of other codes in Table 2, refer to FIG. 3 and related content thereof. Details are not described herein again.

Herein, it should be noted that, when the charging terminal switches to an unavailable state, the charging connector is also unavailable. The light-emitting status of the side indicator may be the same as the light-emitting status of the connector holder light. In this case, both the connector holder light and/or the side indicator may be red in the steady-on mode at a light-emitting periodicity b when the charging terminal is unavailable. The light-emitting periodicity b varies with a reason why the charging terminal is unavailable. When the charging terminal is unavailable, the light-emitting status of the top light is also steady red. When the logged-in user is the operation and maintenance user, the charging terminal can further visualize the light-emitting periodicity b to obtain prompt information, to indicate a reason why the charging terminal is unavailable. It can be learned that the indication information is determined based on the light-emitting periodicity field in the binary light control code, and the binary light control code is used to control display of the connector holder light and/or the side indicator.

When the charging terminal is equipped with a plurality of indicators, both efficiency of understanding by the charging user and abundance and uniformity of indications can be ensured.

Ensuring the efficiency of understanding by the charging user is manifested as follows: Light-emitting statuses of the side indicator and the top light are simple, there are only three light-emitting colors, and a light-emitting mode is fixed (for example, both are in a steady-on mode), facilitating understanding by the charging user.

Ensuring the abundance and uniformity of indications is manifested in at least the following aspects.

In one aspect, the charging terminal may collaboratively control light-emitting statuses of a plurality of indicators, and comprehensively determine a light-emitting status of the side indicator and a light-emitting status of the top light based on light-emitting statuses of connector holder lights, so that the light-emitting statuses of the top light and the side indicator indicate whether the charging terminal is available and whether a charging connector is available when the charging terminal is available. In addition, the connector holder light presents more abundant light-emitting statuses by using a light-emitting periodicity and/or a light-emitting mode, to provide the user with detailed information of a status indicated by the side indicator and the top light. In addition, light-emitting colors of the side indicator, the top light, and the connector holder light indicate a same status.

In another aspect, the connector holder light may present light-emitting statuses in different ranges for different types of users. For example, the operation and maintenance user and the operation user see more light-emitting statuses than the charging user. After the charging terminal is put into operation, to maintain visual consistency between light-emitting statuses of the connector holder light and other indicators (for example, the top light and the side indicator) when the charging user does not operate the charging terminal, a light-emitting status that is visible to the operation and maintenance user but is invisible to the charging user is not visually presented, but is presented by visualizing a code of a light-emitting periodicity. For example, after the charging terminal is put into operation, the connector holder light has different light-emitting statuses in different operation and maintenance operations. However, the different light-emitting statuses have same visual presentation as light-emitting statuses of the side indicator and the top light, and all are steady red. A difference between light-emitting statuses is implemented by changing a light-emitting periodicity while retaining the steady-on mode and a light-emitting color. Therefore, that the operation and maintenance user sees more light-emitting statuses is implemented by visualizing a code of the light-emitting periodicity.

In addition to the connector holder light, the side indicator may also present light-emitting statuses in different ranges for different types of users. For details, refer to the following descriptions of FIG. 4A to FIG. 4C.

FIG. 4A to FIG. 4C show light-emitting status switching logic of a plurality of indicators, and shows that, when the charging terminal is equipped with a plurality of indicators, both efficiency of understanding by the charging user and abundance and uniformity of indications can be ensured.

As shown in FIG. 4A, light-emitting status switching logic of the connector holder light includes: After power-on, when the charging connector is in the connector holder and is not reserved, the charging terminal controls the light-emitting status of the connector holder light to be steady white. When the charging connector switches to a selected state and the connector is to be removed (to be removed from the connector holder), the charging terminal controls the light-emitting status of the connector holder light to switch to blinking in white. Subsequently, if the charging connector switches to a connector-removed state and the connector is to be plugged, the charging terminal controls the light-emitting status of the connector holder light to switch to breathing in white. Then, if the charging connector switches to a state in which the connector is plugged into the charging port of the vehicle and has not entered a charging mode, the charging terminal controls the light-emitting status of the connector holder light to switch to being steady blue at a light-emitting periodicity a1. When the charging connector enters a charging mode and the charging connector is in a charging state, the charging terminal controls the light-emitting status of the connector holder light to switch to being steady blue at a light-emitting periodicity a2, rotating clockwise in green, or being gradually filled in green. Herein, the light-emitting status varies in different charging modes. For specific light-emitting statuses, refer to the content indicated by the number 8 to the number 10 in Table 2. Details are not described herein again. Subsequently, if the charging connector exits the charging mode and switches to a state in which charging ends and the connector is to be removed, the charging terminal controls the light-emitting status of the connector holder light to switch to being steady blue at a light-emitting periodicity a3. After the charging ends, if the charging connector switches to a state in which the connector is being removed and the connector is not returned within 60s after being removed, the charging terminal controls the light-emitting status of the connector holder light to switch to breathing in white. Subsequently, if the charging connector switches to a state in which the connector is not returned 60s or more after being removed, the charging terminal controls the light-emitting status of the connector holder light to switch to blinking in green. After the charging connector is returned to the connector holder, when the charging connector is in the connector holder again and is not reserved, the charging terminal controls the light-emitting status of the connector holder light to switch to being steady white.

Still as shown in FIG. 4A, when the connector holder light is idle or occupied, if the charging terminal is unavailable, the charging terminal controls the light-emitting status of the connector holder light to switch to being steady red.

When the charging terminal switches to an unavailable state, a light-emitting periodicity at which the connector holder light is steady red may vary. Different light-emitting periodicities indicate different reasons why the charging terminal is unavailable. This may also be understood as that different light-emitting periodicities indicate different events that cause the charging terminal to be unavailable. For example, still as shown in FIG. 4A, when the charging connector is idle, if payment authentication fails, the charging terminal is unavailable due to a payment failure, and therefore the charging connector is also unavailable. The charging terminal controls the connector holder light to be steady red at a light-emitting periodicity b1. Herein, a scenario in which a payment failure occurs includes: After the charging ends, the charging user plugs the charging connector back into the connector holder, and the charging connector is idle. The connector holder light may be steady white. In this case, the charging user attempts to pay charging fees, but payment authentication fails. For another example, when the charging connector is unavailable because the charging terminal is disabled or because an alarm or a fault, for example, a hardware problem or a communication failure, occurs during use of the charging terminal, the charging terminal controls the connector holder light to be steady red at a light-emitting periodicity b2. For still another example, when the charging connector is unavailable because the charging terminal is unavailable during an upgrade or self-check upon deployment, the charging terminal controls the connector holder light to be steady red at a light-emitting periodicity b3.

Still as shown in FIG. 4A, subsequently, after a problem that causes the charging terminal to be unavailable is resolved, the charging connector switches to an idle state, and the charging terminal controls the light-emitting status of the charging connector to switch to being steady white. That the problem is resolved includes at least one of the following cases: After payment fails, re-payment is performed, and support authentication succeeds. The charging terminal recovers to an available state when the fault is rectified or the disabling is canceled. The charging terminal completes a maintenance operation, for example, the upgrade or the self-check upon deployment.

It should be noted that the light-emitting statuses of the charging connector in FIG. 4A are obtained based on Table 2. The light-emitting periodicity a1 in FIG. 4A has different values in different stages in which the charging connector is occupied. Refer to the values of the light-emitting periodicities indicated by the number 5 to the number 7 in Table 2. The light-emitting periodicity a2 has different values in different stages in which the charging connector is occupied. Refer to the values of the light-emitting periodicities indicated by the number 8 to the number 10 in Table 2. The light-emitting periodicity a3 has different values in different stages in which the charging connector is occupied. Refer to the values of the light-emitting periodicities indicated by the number 11 and the number 12 in Table 2. For examples of the light-emitting periodicity b1 to the light-emitting periodicity b3, refer to the values of the light-emitting periodicities indicated by the number 17 to the number 23 in Table 2. Details are not described herein again.

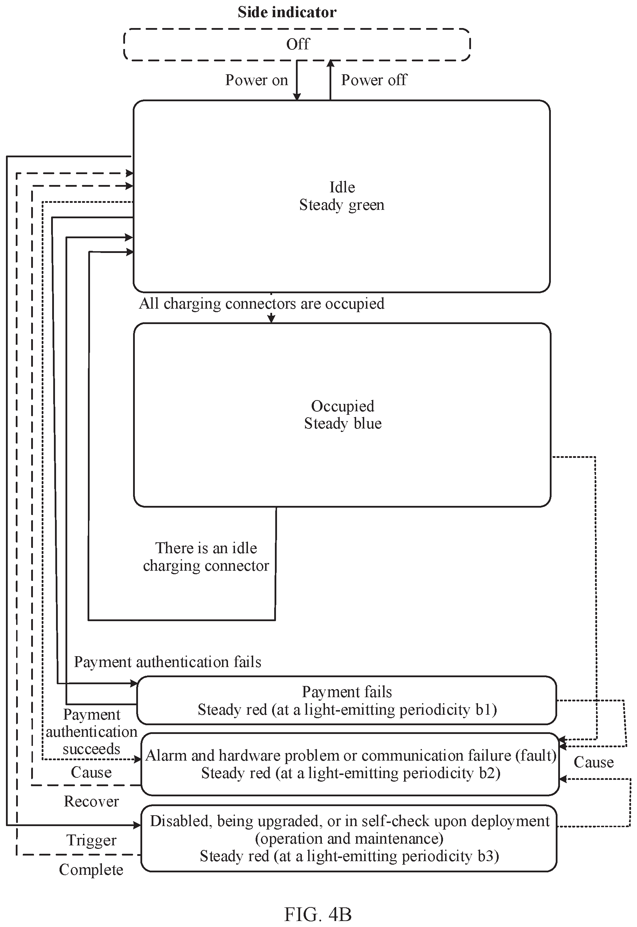

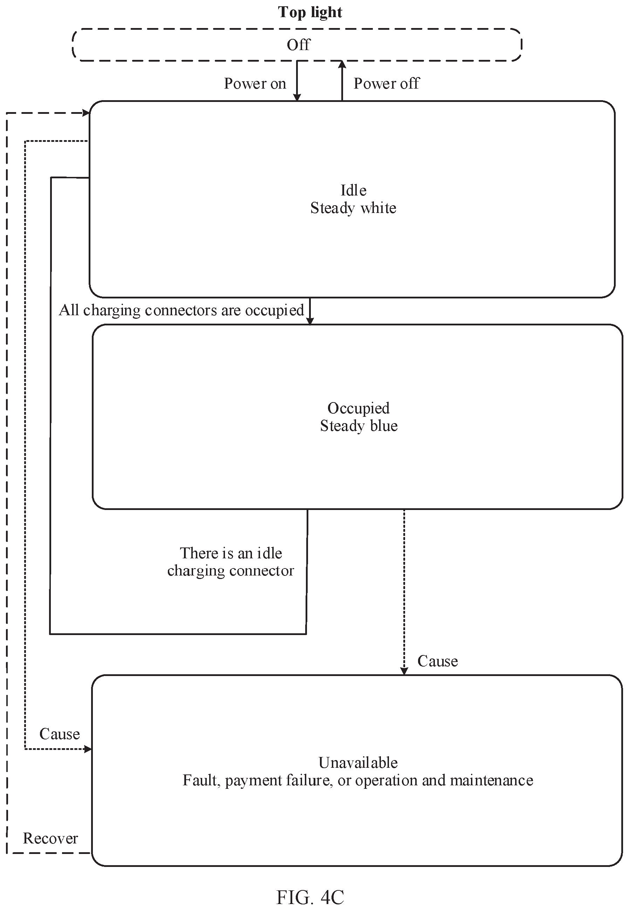

The charging terminal may comprehensively determine a light-emitting status of the side indicator and a light-emitting status of the top light based on light-emitting statuses of connector holder lights. As shown in FIG. 4B and FIG. 4C, light-emitting status switching logic of the side indicator and the top light includes: After power-on, when light-emitting statuses of charging connectors comprehensively indicate that there is an idle charging connector, the charging terminal is idle, and the charging terminal controls the light-emitting status of the side indicator to be steady green, and controls the light-emitting status of the top light to be steady white. Being steady green is short for being green in a steady-on mode, and being steady white is similar. When the charging terminal is idle, the light-emitting statuses of the charging connectors comprehensively indicating that all the charging connectors are occupied indicates that the charging terminal switches from being idle to being occupied, and the charging terminal controls the side indicator and the top light to switch to being steady blue. The charging terminal being idle indicates that the charging terminal is available and has an idle charging connector. The charging terminal being occupied indicates that the charging terminal is available and all the charging connectors are occupied. When the charging terminal is occupied or idle, a case in which the light-emitting statuses of the charging connectors comprehensively indicate that all the charging connectors are unavailable indicates that the charging terminal switches from being occupied or idle to being unavailable, and the charging terminal controls the light-emitting status of the side indicator and the light-emitting status of the top light to switch to being steady red. The charging terminal being unavailable includes: The charging terminal is faulty, or a payment failure occurs; or the charging terminal is in maintenance due to an operation and maintenance operation. When the charging terminal is unavailable or occupied, a case in which the light-emitting statuses of the charging connectors comprehensively indicate that there is an idle charging connector indicates that the charging terminal recovers from an unavailable state to an available state and has an idle charging connector, or indicates that the charging terminal switches from an occupied state to an idle state, and the charging terminal controls the light-emitting status of the side indicator and the light-emitting status of the top light to switch to being steady green and being steady white respectively.

It can be learned from FIG. 4A to FIG. 4C that, when the connector holder light is in different stages of the idle state, a light-emitting mode and/or a light-emitting periodicity of the connector holder light may vary, but the connector holder light remains in white or green. This means that the charging terminal is idle and has an available charging connector. In this case, both the side indicator and the top light are consistent with the connector holder light, and also indicate that the charging terminal is idle. Therefore, a light-emitting status presented by the side indicator to the user is steady green, and a light-emitting status presented by the top light to the user is steady white. When the connector holder light is in different stages of the occupied state, a light-emitting periodicity of the connector holder light may vary, to provide more abundant indications, but the connector holder light remains in blue or green. This means that the charging terminal is available but all the charging connectors are occupied. In this case, the side indicator and the top light are consistent with the connector holder light, and also indicate that the charging terminal is occupied. Therefore, both a light-emitting status presented by the side indicator to the user and a light-emitting status presented by the top light to the user are steady blue. When the connector holder light is in an unavailable state, a light-emitting periodicity of the connector holder light may vary with a cause of unavailability, to provide more abundant indications, but the connector holder light remains in steady red. This means that the charging terminal is unavailable. In this case, the side indicator and the top light are consistent with the connector holder light, and also indicate that the charging terminal is unavailable. Therefore, both a light-emitting status presented by the side indicator to the user and a light-emitting status presented by the top light to the user are steady red.

It should be noted that, when the connector holder light is red in the steady-on mode due to unavailability of the charging terminal, the light-emitting status of the connector holder light may be enabled to vary at different light-emitting periodicities, to indicate a cause of unavailability. However, the light-emitting status of the charging connector visually remains unchanged, and is still steady red. In this case, the light-emitting status of the charging connector is visually consistent with the light-emitting status of the side indicator and the light-emitting status of the top light. However, the operation and maintenance user may further see a code of a light-emitting periodicity, to determine a specific reason why the charging connector is unavailable. For advantages of switching the light-emitting periodicity when the charging connector is occupied and the connector holder light in blue in the steady-on mode, refer to the descriptions herein. Details are not described again.

It should be further noted that, when a change in a status is indicated by switching a light-emitting mode or a light-emitting color, a light-emitting periodicity may not be limited. Therefore, in FIG. 4A to FIG. 4C, no light-emitting periodicity is mentioned for some statuses. This is not limited in embodiments of this application, provided that an implementation is appropriate.

In FIG. 4A to FIG. 4C, a scenario in which the side indicator and the top light are steady blue is not limited to the scenario in FIG. 4A to FIG. 4C in which all the charging connectors are occupied, and may further include another scenario in which all the charging connectors are occupied. For example, the charging connectors in the charging terminal are in a sequence number setting stage, or the charging connectors in the charging terminal are in connector holders but are reserved.

In some possible cases, to reduce power consumption, when the connector holder light is in the connector holder and is not reserved, if ambient light is abundant, the charging terminal may control the connector holder light to be powered off, so that the connector holder light is in an off state. When the charging terminal is idle and ambient light is abundant, the charging terminal may control the side indicator and the top light to be powered off, so that the connector holder light is in an off state.

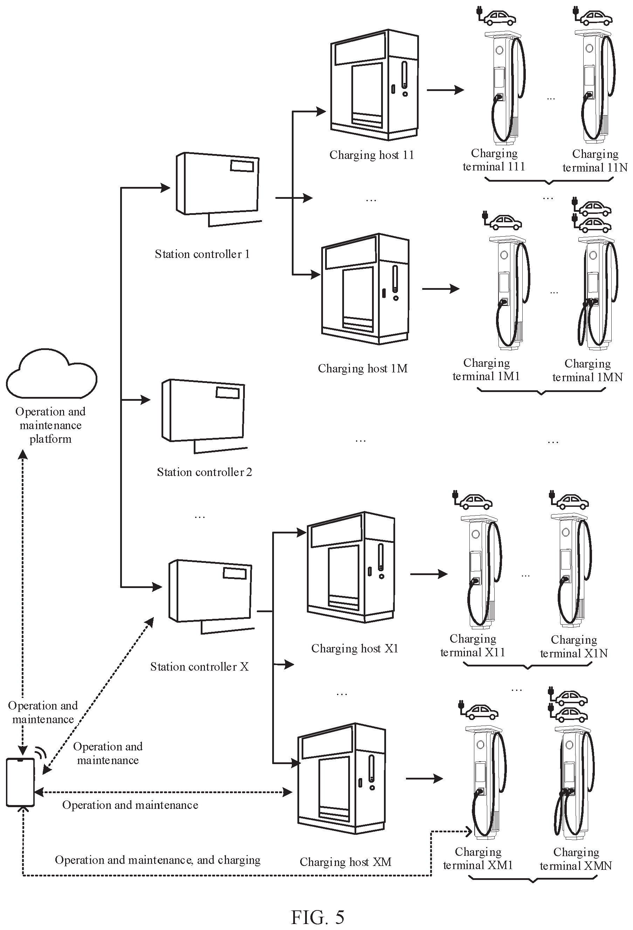

FIG. 5 shows an example charging system in which a charging terminal is used.

As shown in FIG. 5, the charging system may include an operation and maintenance platform and X station controllers. One station controller further manages M charging hosts. N charging terminals may be mounted to one charging host. All of X, Y, and N are integers greater than or equal to 1. The N charging terminals may include different types of charging terminals. Through division based on heat dissipation modes, the N charging terminals may include X air-cooled terminals and Y liquid-cooled terminals. X and Y are integers greater than or equal to 0, but X+Y=N. To enable power obtained through conversion by the charging host to be fully utilized by the N charging terminals, and to maintain efficient control of the charging host over the N charging terminals, a value of N may be less than or equal to 12.

A charging terminal, a charging host connected to the charging terminal, a station controller, and an operation and maintenance platform operate in coordination to form a complete charging system.

A function of the charging terminal includes but is not limited to: being directly oriented to a user to provide interaction (for example, user login, connector selection, and charging payment) for the user, interacting with a vehicle to perform charging, and feeding back a status (for example, a status of a charging connector and a status of the charging terminal) to an upper-layer device, so that the upper-layer device makes a decision. The upper-layer device includes the charging host, the station controller, and the operation and maintenance platform.

In this embodiment of this application, the charging terminal is further configured to indicate the status of the charging terminal by using a top light. When the charging terminal further includes another indicator (for example, a connector holder light and/or a side indicator) in addition to the top light, the charging terminal may be further configured to collaboratively control light-emitting statuses of a plurality of indicators, to ensure both efficiency of understanding by a charging user and abundance and uniformity of indications when the plurality of indicators emit light.

A function of the charging host includes but is not limited to: providing services, such as power conversion, power distribution, and thermal management, for the charging terminal, so that the charging terminal can charge a vehicle, and establishing communication between the charging terminal and the station controller.

A function of the station controller includes but is not limited to: monitoring statuses of the charging terminal and the charging host, and reporting the statuses to the operation and maintenance platform; receiving instruction data (for example, charging fees and a login result) from the operation and maintenance platform, and delivering the instruction data to the charging terminal; and controlling the charging host to distribute power to each charging terminal connected to the charging host.

A function of the operation and maintenance platform includes but is not limited to: monitoring a status of each device in the charging system and providing a fault repair service; and handling a user login, and providing a charging fee statistics service and the like.

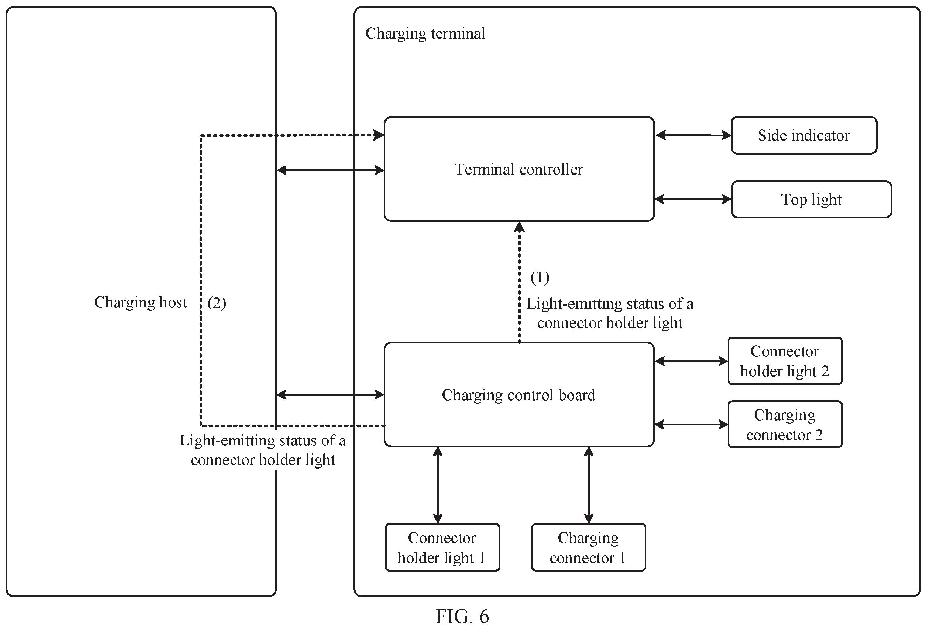

FIG. 6 is a diagram of interaction performed when a charging terminal collaboratively controls a plurality of indicators.

As shown in FIG. 6, the charging terminal may include a top light, a side indicator, a terminal controller, a charging control board, at least one charging connector, and a connector holder light corresponding to each charging connector. Herein, an example in which the charging terminal includes a charging connector 1, a connector holder light 1 corresponding to the charging connector 1, a charging connector 2, and a connector holder light 2 corresponding to the charging connector 2 is used for description.

In some possible cases, refer to a control mode (a control mode 1) shown in (1) in FIG. 6. First, the charging control board in the charging terminal detects that a status of the charging connector 1 switches to a state a. Then the charging control board generates a binary light control code (a binary light control code 1) of the connector holder light 1 based on the state a. Then the charging control board transmits the binary light control code 1 to the connector holder light 1. Specifically, refer to the content shown in FIG. 3. The charging control board encapsulates the binary light control code 1 into a data field of an RTU-MODBUS message frame, and transmits the RTU-MODBUS message frame from an RS485 interface on the charging control board to the connector holder light 1 through the RTU-MODBUS protocol. A digital signal processor (digital signal processor, DSP) in the connector holder light 1 may parse the binary light control code 1, and convert the binary light control code 1 into a corresponding electrical signal, to control a light bead on the connector holder light to emit light. That the light bead emits light means that the connector holder light has a light-emitting status. In this case, the light-emitting status of the connector holder light may indicate that the charging connector 1 is in the state a.

In addition, in response to status switching of the charging connector 1, the charging control board synchronizes the light-emitting status (the state a) of the connector holder light 1 to the terminal controller. Specifically, the charging control board uses the binary light control code 1 to represent the state a. The charging control board encapsulates the binary light control code 1 into a data field of a TCP-MODBUS message frame, and transmits the TCP-MODBUS message frame from an FE network interface on the charging control board to the terminal controller through the TCP-MODBUS protocol.

Subsequently, a central processing unit (central processing unit, CPU) of the terminal controller parses the light-emitting status of the connector holder light 1 based on the binary light control code 1, and then comprehensively determines a light-emitting status of the side indicator and a light-emitting status of the top light based on a light-emitting status of the connector holder light 2. For content related to the comprehensive determining, refer to the content related to FIG. 4A to FIG. 4C. Details are not described herein again. The light-emitting status of the side indicator that is determined by the terminal controller through the CPU of the terminal controller may be represented by a binary light control code (a binary light control code 2) of the side indicator, and the light-emitting status of the top light that is determined by the terminal controller may be represented by a binary light control code (a binary light control code 3) of the top light. Then the terminal controller uses the binary light control code 2 to control the side indicator to emit light, and uses the binary light control code 3 to control the top light to emit light.

A manner of using, by the terminal controller, the binary light control code 3 to control the top light to emit light may include the following top light control mode 1.

Top light control mode 1: The terminal controller encapsulates the binary light control code 3 into a data field of an RTU-MODBUS message frame through the CPU of the terminal controller, and transmits the RTU-MODBUS message frame to the top light from an RS485 interface on the terminal controller through the RTU-MODBUS protocol. Then the top light parses the binary light control code 3 through a DSP of the top light, and converts the binary light control code 3 into a corresponding electrical signal, to control a light bead on the top light to emit light. That the light bead emits light means that the top light has a light-emitting status. In this case, the light-emitting status of the top light may indicate a status of the charging terminal.

To reduce manufacturing costs of the top light, the DSP in the top light may be omitted. A function related to the DSP in the top light is encapsulated into a parsing module. Then the parsing module is deployed in the terminal controller, and is specifically deployed in the CPU of the terminal controller. In this case, a control mode for the top light may change from the foregoing top light control mode 1 to the following top light control mode 2.

Top light control mode 2: The terminal controller parses the binary light control code 3 through the parsing module in the CPU of the terminal controller, and converts the binary light control code 3 into a corresponding electrical signal, to control, in a dry contact DI/PWM-based light control mode, a light bead on the top light to emit light.

A light control mode used when the terminal controller uses the binary light control code 2 to control the side indicator to emit light may include the following side indicator control mode 1.

Side indicator control mode 1: The terminal controller encapsulates the binary light control code 2 into a data field of an RTU-MODBUS message frame through the CPU of the terminal controller, and transmits the RTU-MODBUS message frame to the side indicator from the RS485 interface on the terminal controller through the RTU-MODBUS protocol. Then the side indicator parses the binary light control code 2 through a DSP of the side indicator, and converts the binary light control code 2 into a corresponding electrical signal, to control a light bead on the side indicator to emit light. That the light bead emits light means that the side indicator has a light-emitting status. In this case, the light-emitting status of the side indicator may indicate a status of the charging terminal.

To reduce manufacturing costs of the side indicator, the DSP in the side indicator may be omitted. A function related to the DSP in the side indicator is encapsulated into the parsing module in the CPU of the terminal controller. In this case, a control mode for the side indicator may change from the foregoing side indicator control mode 1 to the following side indicator control mode 2.

Side indicator control mode 2: The terminal controller parses the binary light control code 2 through the parsing module in the CPU of the terminal controller, and converts the binary light control code 2 into a corresponding electrical signal, to control, in a dry contact DI/PWM-based light control mode, a light bead on the side indicator to emit light.

In the foregoing content, an example in which all light beads of the side indicator are used to present one light-emitting status to indicate the status of the charging terminal is used for description. In an actual case, light beads of the side indicator may be evenly divided into E groups based on a quantity E of connector holder lights in the charging terminal. Each group of light beads corresponds to a light-emitting status of one connector holder light. In this case, the terminal controller may add, to the binary light control code 2, an identifier of a light bead corresponding to the connector holder light 1, so that the side indicator 1 controls, based on the binary light control code 2, only the light bead corresponding to the connector holder light 1 to switch a light-emitting status. When E is equal to 2, the light beads of the side indicator may be divided into two groups of light beads: beads on the left and beads on the right, corresponding to a light-emitting status of the connector holder 1 and a light-emitting status of the connector holder light 2 respectively.

In some other possible cases, the control mode 1 shown in (1) in FIG. 6 is not used, but a control mode (a control mode 2) shown in (2) in FIG. (6) is used. In the control mode 1, when the charging control board transmits a light-emitting status of a connector holder light to the terminal controller, the charging host is not aware. In comparison with the control mode 1, the charging host is introduced into the control mode 2, and serves as a bridge for transmitting a light-emitting status of a connector holder light between the charging control board and the charging controller. An implementation of the control mode 2 is as follows:

First, the charging control board in the charging terminal detects that a status of the charging connector 1 switches to a state a. Then the charging control board generates a binary light control code (a binary light control code 1) of the connector holder light 1 based on the state a. Then the binary light control code 1 is transmitted from the charging control board to the connector holder light 1. Herein, a process of transmitting the binary light control code 1 to the connector holder light 1 and a process in which the connector holder light 1 parses the binary light control code 1 and switches a light-emitting status is the same as those in the foregoing control mode 1. Refer to the foregoing related content. Details are not described herein again.

In addition, in response to status switching of the charging connector 1, the charging control board transmits the light-emitting status (the state a) of the connector holder light 1 to the charging host, and then the light-emitting status is synchronized to the terminal controller through the charging host. Specifically, the charging control board uses the binary light control code 1 to represent the state a. The charging control board encapsulates the binary light control code 1 into a data field of a TCP-MODBUS message frame, and transmits the TCP-MODBUS message frame from an FE network interface on the charging control board to the charging host through the TCP-MODBUS protocol. Subsequently, the charging host synchronizes the TCP-MODBUS message frame from an FE network on the charging host to the charging controller through the TCP-MODBUS protocol.

Then the terminal controller parses the light-emitting status of the connector holder light 1 based on the binary light control code 1, comprehensively determines a light-emitting status of the side indicator and a light-emitting status of the top light based on a light-emitting status of the connector holder light 2, and controls light-emitting status switching of the side indicator and the top light, to indicate a status of the charging terminal. This process is the same as a related process in the foregoing control mode 1. Refer to the foregoing related content. Details are not described herein again.

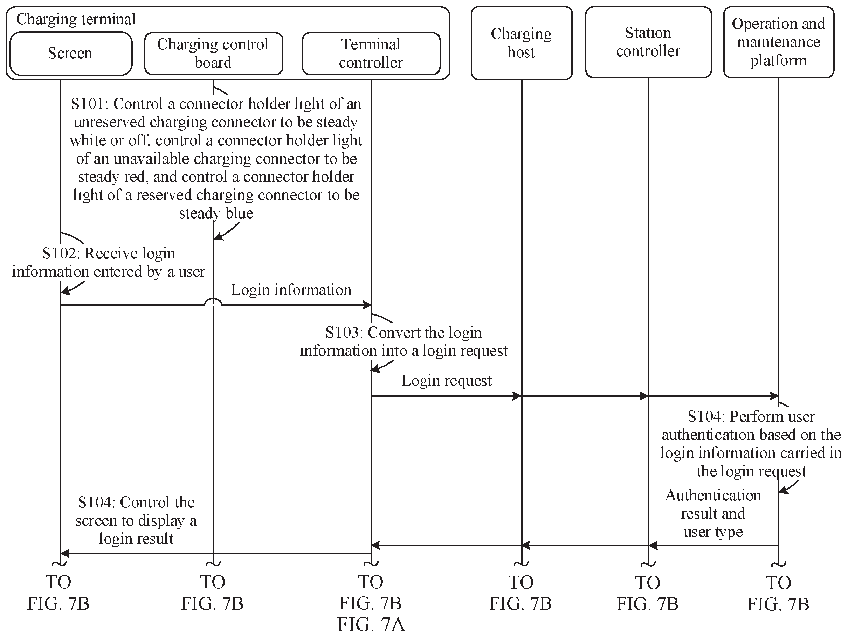

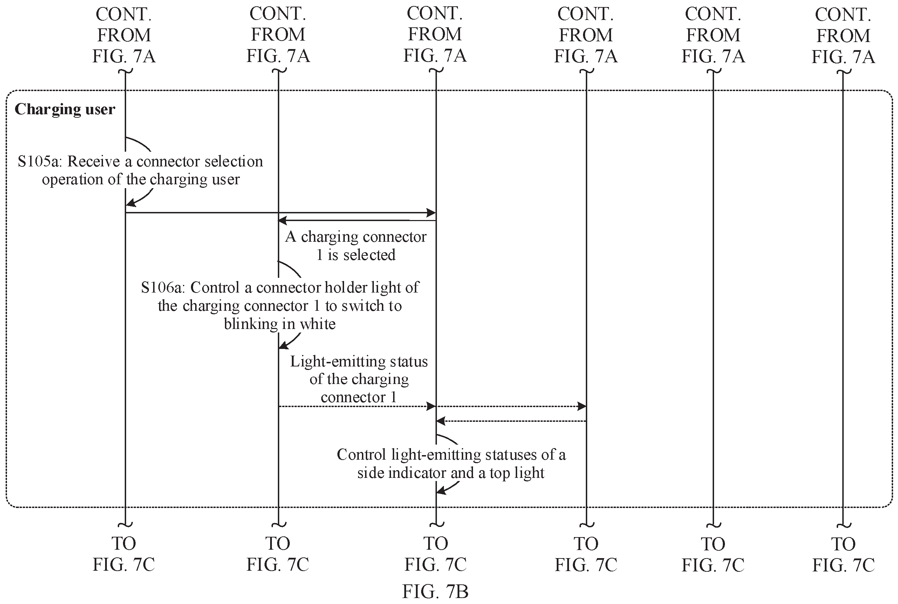

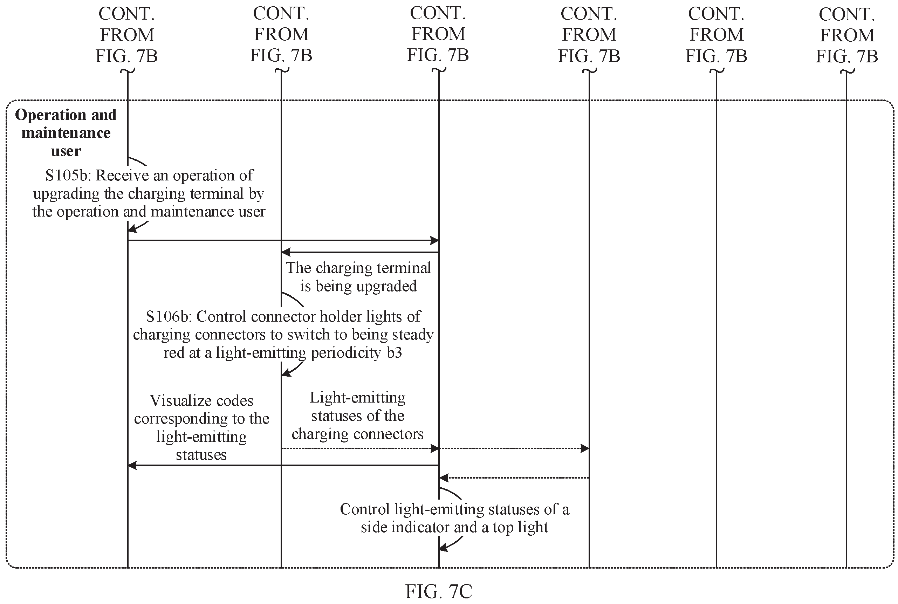

With reference to FIG. 7A to FIG. 9D, the following describes a charging indication method that is provided in embodiments of this application and that is applicable to a charging terminal.

In the method, the charging terminal may receive different types of user operations based on a user type of a logged-in user, and provide corresponding indications by using a plurality of indicators based on light-emitting statuses. For light-emitting statuses that can be presented by the plurality of indicators and provided indications, refer to descriptions of the foregoing related content, for example, FIG. 4A to FIG. 4C and Table 2. This is not limited in embodiments of this application.

FIG. 7A to FIG. 7C are a diagram of an interaction process performed when a charging terminal provides indications for different users.

For the process, refer to the following descriptions of step S101 to step S104, step S105a, step S105b, step S106a, and step S106b.

S101: A charging control board in the charging terminal controls a connector holder light of an unreserved charging connector to be steady white or off, controls a connector holder light of an unavailable charging connector to be steady red, and controls a connector holder light of a reserved charging connector to be steady blue.

The unreserved charging connector in step S101 is a charging connector that is in a connector holder and that is not reserved in the foregoing descriptions. The unavailable charging connector is a charging connector that is unavailable in the foregoing descriptions. The reserved charging connector is a charging connector that is in a connector holder but is reserved in the foregoing descriptions.

In some possible cases, the unreserved charging connector may be in an off state when ambient light is abundant, and may be steady white when ambient light is poor. Alternatively, the unreserved charging connector is steady white regardless of an ambient light condition.

S102: The charging terminal receives, by using a screen, login information entered by a user.

The user may enter the login information by scanning a login QR code on the screen, entering an account and a password in a charging app, or the like. In addition to the method described in S102, the login information may alternatively be input to the charging terminal in another manner, for example, by swiping a card. This is not limited in this embodiment of this application.

S103: The charging terminal transmits the login information to a terminal controller, the terminal controller converts the login information into a login request and sends the login request to a charging host, and then the charging host transmits the login request to an operation and maintenance platform through a station controller.

S104: The operation and maintenance platform performs user authentication based on the login information carried in the login request. After the authentication succeeds, the operation and maintenance platform returns an authentication result and a user type to the charging terminal through the station controller and the charging host. The terminal controller of the charging terminal controls the screen to display the login result.

For different types of users, the charging terminal may receive different user operations. Correspondingly, light-emitting statuses presented by the charging terminal by using indicators may also be different. For example, for a charging user, the charging terminal may receive a charging operation. In response to the charging operation, the charging terminal may present corresponding light-emitting statuses by using indicators. Refer to descriptions of the following step S105b and step S106b.

S105a: The charging terminal receives a connector selection operation of the charging user.

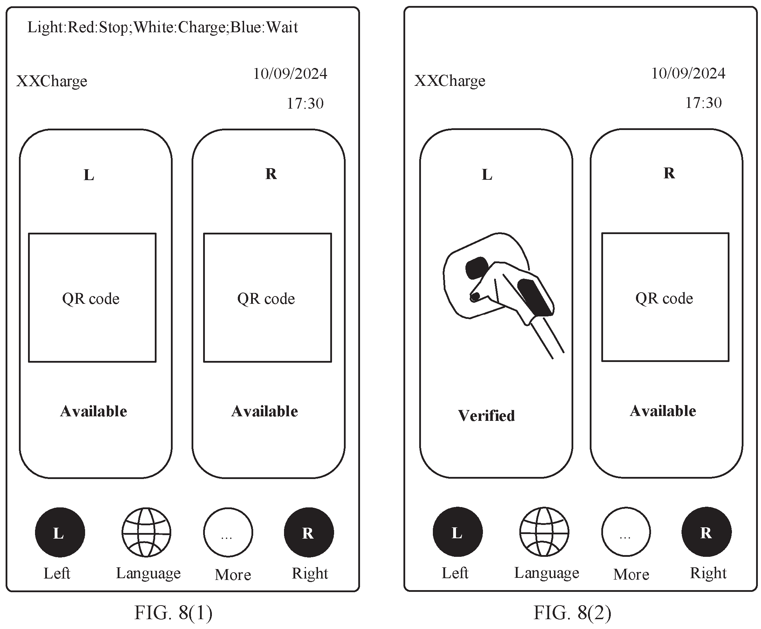

As shown in FIG. 8(1), the user may scan a QR code (QR Code) on the screen by using a mobile device (for example, a mobile phone) to select a charging connector corresponding to the QR code. The mobile device sends device identification information obtained through scanning to the operation and maintenance platform. The operation and maintenance platform processes the device identification information, and determines a charging terminal and a charging connector (denoted as a charging connector 1) that are indicated by the device identification information. Then the operation and maintenance platform delivers an instruction for activating the charging connector 1 to the charging terminal. The instruction is parsed and executed by the terminal controller, and the terminal controller notifies the charging control board that the charging connector 1 is selected.

After the connector is successfully selected, the charging terminal may display, on the screen, an interface indicating that the connector is successfully selected. For an example interface, refer to a user interface shown in FIG. 8(2). Alternatively, the charging control board may perform the following step S106a to change a light-emitting status of a connector holder light to notify the user that the connector is successfully selected.

S106a: The charging control board controls a connector holder light of the charging connector 1 to switch to blinking in white, and synchronizes a light-emitting status of the charging connector 1 to the terminal controller. The terminal controller controls a light-emitting status of a side indicator and a light-emitting status of a top light based on the light-emitting status of the charging connector 1.

In step S106a, the light-emitting status of the charging connector 1 is blinking in white. Refer to the foregoing descriptions of FIG. 6. The light-emitting status of the charging connector 1 may be represented by a binary light control code corresponding to blinking in white. That the charging control board controls the connector holder light of the charging connector 1 to switch to blinking in white is implemented by controlling, by using the binary light control code, the connector holder light 1 to emit light. The binary light control code carries a binary character indicating that a light-emitting mode is blinking and a binary character indicating that a light-emitting color is white, and may further carry a binary character indicating another light-emitting parameter, for example, a light-emitting periodicity. For detailed content of the process, refer to the foregoing related descriptions of FIG. 6. Details are not described herein again.

Synchronizing the light-emitting status of the charging connector 1 to the terminal controller may be understood as sending the binary light control code to the terminal controller. The light-emitting status of the side indicator and the light-emitting status of the top light are results comprehensively determined based on light-emitting statuses of connector holder lights in the charging terminal. The terminal controller may determine the light-emitting statuses of the connector holder lights based on the binary light control code and a latest binary light control code of another connector holder light in the charging terminal, to comprehensively determine the light-emitting status of the side indicator and the light-emitting status of the top light. For detailed content of the process, refer to the foregoing descriptions of FIG. 4A to FIG. 4C and FIG. 6. Details are not described herein again.

Herein, the light-emitting status of the charging connector 1 being blinking in white indicates that the charging connector is idle. In this case, the charging terminal has an idle charging connector, and the terminal controller may control the side indicator to be steady green and the top light to be steady white.

For an operation and maintenance user, in addition to a charging operation, the charging terminal may further receive an operation and maintenance operation. The operation and maintenance operation is used as an example. For the charging operation, refer to related descriptions. Details are not described herein again. In response to the operation and maintenance operation, the charging terminal may present corresponding light-emitting statuses by using indicators. Refer to descriptions of the following step S105b and step S106b.

S105b: The charging terminal receives an operation of upgrading the charging terminal by the operation and maintenance user.

In response to the upgrade operation, the terminal controller controls the charging terminal to be upgraded, and notifies the charging control board that the charging terminal is being upgraded.

The charging control board determines that the charging terminal is in an unavailable state due to the upgrade, and performs the following step S106b.

S106b: The charging control board controls connector holder lights of charging connectors to switch to being steady red at a light-emitting periodicity b3, and synchronizes light-emitting statuses of the charging connectors to the terminal controller. The terminal controller controls a light-emitting status of a side indicator and a light-emitting status of a top light based on the light-emitting statuses of the charging connectors, and visualizes codes of light-emitting periodicities.

For an example value of the light-emitting periodicity b3, refer to the content indicated by the number 17 in Table 2. For a detailed process of step S106a, refer to the foregoing descriptions of step S106a, FIG. 4A to FIG. 4C, FIG. 6, and related content thereof. Details are not described herein again.

Herein, it should be noted that the upgrade is used as an example for description in step S105b and step S106b, and other operation and maintenance operations such as self-check and disabling may alternatively be included in practice. The operation and maintenance user may trigger a charging operation by using a key terminal. Refer to the foregoing descriptions of Table 2 and FIG. 4A to FIG. 4C. This is not limited in this embodiment of this application.

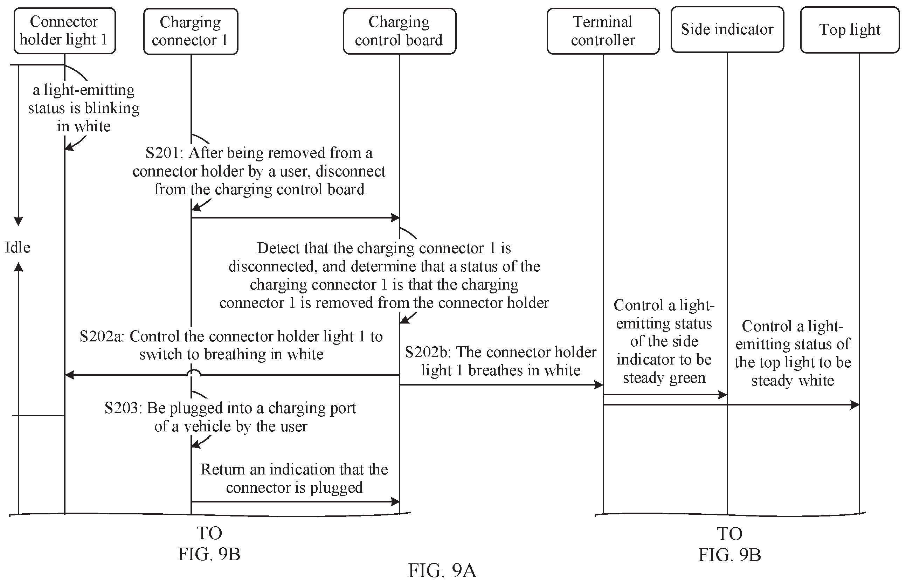

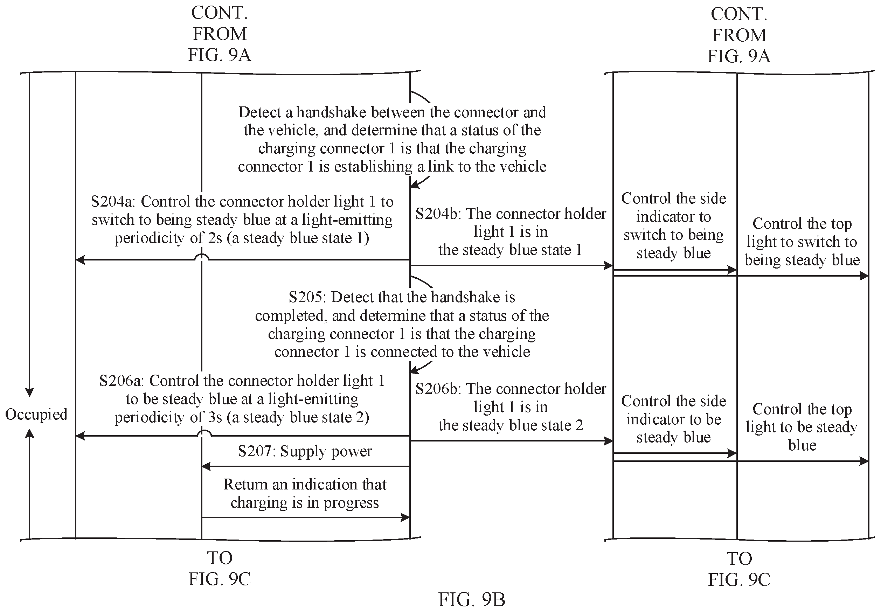

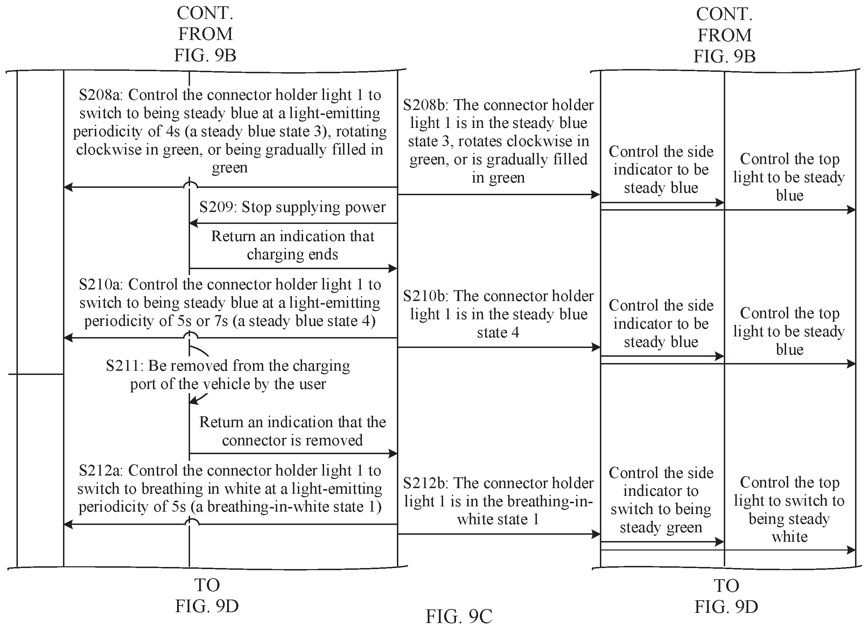

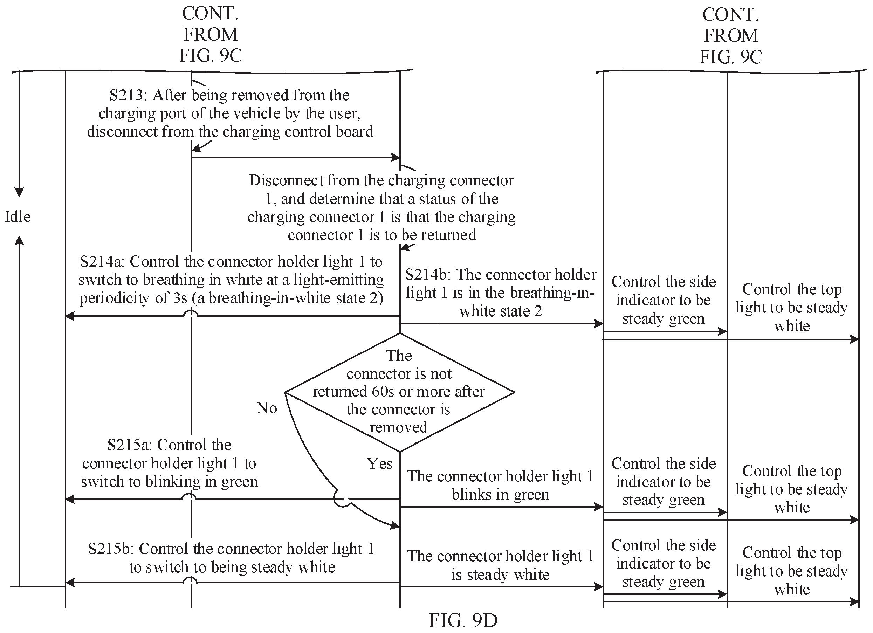

Based on FIG. 9A to FIG. 9D, the following describes an example flowchart of providing, by a charging terminal, an indication for a user based on indicators.

In step S106a, the charging connector 1 is selected but is not removed. In this case, a light-emitting status of a connector holder light (the connector holder light 1) corresponding to the charging connector 1 is steady white. In response to a subsequent charging operation of the user, the charging terminal may further continue to control the connector holder light 1, the side indicator, and the top light to present corresponding light-emitting statuses. For the process, refer to the following descriptions of step S201 to step S215b in FIG. 9A to FIG. 9D.

S201: After being removed from a connector holder by the user, the charging connector 1 disconnects from the charging control board. The charging control board detects that the charging connector 1 is disconnected, and determines that a status of the charging connector 1 is that the charging connector 1 is removed from the connector holder but is not plugged into a charging port of a vehicle. In this case, the charging control board performs the following step S202a and step S202b.

S202a: The charging control board controls the connector holder light 1 to switch to breathing in white.

The charging control board generates a binary light control code a. The binary light control code a carries a binary character indicating that a light-emitting mode is breathing and a binary character indicating that a light-emitting color is white, and may further carry a binary character indicating another light-emitting parameter, for example, a light-emitting periodicity, to control the connector holder light 1 to switch to breathing in white. For detailed content of the process, refer to the foregoing related descriptions of FIG. 6. Details are not described herein again.

S202b: The charging control board sends a light-emitting status (breathing in white) of the connector holder light 1 to the terminal controller. Subsequently, the terminal controller controls the light-emitting status of the side indicator and the light-emitting status of the top light based on the light-emitting status of the charging connector 1.

The light-emitting status of the connector holder light 1 being breathing in white may be represented by the binary light control code a.

The light-emitting status of the side indicator and the light-emitting status of the top light are results comprehensively determined based on light-emitting statuses of connector holder lights in the charging terminal. The terminal controller may determine, based on the binary light control code a, that the connector holder light 1 is idle. In this case, the charging terminal has an idle charging connector, and the terminal controller may control the light-emitting status of the side indicator to be steady green, and control the light-emitting status of the top light to be steady white. For detailed content of the process, refer to the foregoing descriptions of FIG. 4A to FIG. 4C and FIG. 6. Details are not described herein again.

S203: After being plugged into the charging port of the vehicle by the user, the charging connector 1 returns, to the charging control board, an indication that the connector is plugged. Subsequently, the charging control board detects a handshake between the connector and the vehicle, determines that a status of the charging connector 1 is that the charging connector 1 is establishing a link to the vehicle, and performs the following step S204a and step S204b.

S204a: The charging control board controls the connector holder light 1 to switch to being steady blue at a light-emitting periodicity of 2s (a steady blue state 1).

The charging control board generates a binary light control code b. The binary light control code b carries a binary character indicating that a light-emitting mode is steady on and a binary character indicating that a light-emitting color is blue, and further carries a binary character indicating that a light-emitting periodicity is 2s, to control the connector holder light 1 to switch to the steady blue state 1. For detailed content of the process, refer to the foregoing related descriptions of FIG. 6. Details are not described herein again.

S204b: The charging control board sends a light-emitting status (the steady blue state 1) of the connector holder light 1 to the terminal controller. Subsequently, the terminal controller controls the light-emitting status of the side indicator and the light-emitting status of the top light based on the light-emitting status of the charging connector 1.

The light-emitting status of the connector holder light 1 being the steady blue state 1 may be represented by the binary light control code b.

The light-emitting status of the side indicator and the light-emitting status of the top light are results comprehensively determined based on light-emitting statuses of connector holder lights in the charging terminal. The terminal controller may determine, based on the binary light control code b, that the connector holder light 1 is occupied. If the charging terminal has only one charging connector or the terminal controller determines, based on a latest binary light control code of another charging connector, that the another charging connector is also occupied, the terminal controller may control the light-emitting status of the side indicator to switch to being steady blue, and control the light-emitting status of the top light to switch to being steady blue. If the charging terminal still has an idle charging connector (not shown in FIG. 9A to FIG. 9D), the terminal controller may control the light-emitting status of the side indicator to still be steady green, and control the light-emitting status of the top light to still be steady white. For detailed descriptions of the process, refer to the foregoing descriptions of FIG. 4A to FIG. 4C and FIG. 6. Details are not described herein again.

S205: When detecting that the handshake is completed and determining that a status of the charging connector 1 is that the charging connector 1 is connected to the vehicle, the charging control board may perform the following step S206a and step S206b.

S206a: The charging control board controls the connector holder light 1 to switch to being steady blue at a light-emitting periodicity of 3s (a steady blue state 2).

The charging control board generates a binary light control code c. The binary light control code c carries a binary character indicating that a light-emitting mode is steady on and a binary character indicating that a light-emitting color is blue, and further carries a binary character indicating that a light-emitting periodicity is 3s, to control the connector holder light 1 to switch to the steady blue state 2. For detailed content of the process, refer to the foregoing related descriptions of FIG. 6. Details are not described herein again.

S206b: The charging control board sends a light-emitting status (the steady blue state 2) of the connector holder light 1 to the terminal controller. Subsequently, the terminal controller controls the light-emitting status of the side indicator and the light-emitting status of the top light based on the light-emitting status of the charging connector 1.

The light-emitting status of the connector holder light 1 being the steady blue state 2 may be represented by the binary light control code c.

The light-emitting status of the side indicator and the light-emitting status of the top light are results comprehensively determined based on light-emitting statuses of connector holder lights in the charging terminal. The terminal controller may determine, based on the binary light control code c, that the connector holder light 1 is occupied. If the charging terminal has only one charging connector or the terminal controller determines, based on a latest binary light control code of another charging connector, that the another charging connector is also occupied, the terminal controller may control the light-emitting status of the side indicator to be steady blue, and control the light-emitting status of the top light to be steady blue. If the charging terminal still has an idle charging connector (not shown in FIG. 9A to FIG. 9D), the terminal controller may control the light-emitting status of the side indicator to still be steady green, and control the light-emitting status of the top light to still be steady white. For detailed descriptions of the process, refer to the foregoing descriptions of FIG. 4A to FIG. 4C and FIG. 6. Details are not described herein again.

S207: The charging control board starts to supply power to the charging connector 1. After successfully charging the vehicle, the charging connector 1 returns, to the charging control board, an indication that charging is in progress. The charging control board determines that the charging connector is performing charging, and performs the following step S208a and step S208b.

S208a: The charging control board controls the connector holder light 1 to switch to being steady blue at a light-emitting periodicity of 4s (a steady blue state 3), rotating clockwise in green, or being gradually filled in green.

The charging control may determine, based on a charging mode of the charging connector, a light-emitting status of the connector holder light 1 during charging. For details, refer to the content indicated by the number 8 to the number 10 in Table 2. Details are not described herein again.

S208b: The charging control board sends a light-emitting status (the steady blue state 3, rotating clockwise in green, or being gradually filled in green) of the connector holder light 1 to the terminal controller. Subsequently, the terminal controller controls the light-emitting status of the side indicator and the light-emitting status of the top light based on the light-emitting status of the charging connector 1.

The terminal controller may control the light-emitting status of the side indicator to be steady blue, and control the light-emitting status of the top light to be steady blue.

Step S208a is similar to step S206a, step S204a, and the like. Step S208b is similar to step S206b, step S204b, and the like. Refer to the foregoing descriptions of related steps. Details are not described herein again.

S209: The charging control board stops supplying power. The charging connector 1 no longer charges the vehicle, and returns, to the charging control board, an indication that charging ends. The charging control board determines that the charging connector stops charging, and performs the following step S210a and step S210b.

S210a: The charging control board controls the connector holder light 1 to switch to being steady blue at a light-emitting periodicity of 5s or 7s (a steady blue state 4).

The charging control board determines, depending on whether the vehicle is fully charged when the charging ends, whether a light-emitting periodicity is 5s or 7s. For details, refer to the content indicated by the number 11 and the number 12 in Table 2. Details are not described herein again.

S210b: The charging control board sends a light-emitting status (the steady blue state 4) of the connector holder light 1 to the terminal controller. Subsequently, the terminal controller controls the light-emitting status of the side indicator and the light-emitting status of the top light based on the light-emitting status of the charging connector 1.

The terminal controller may control the light-emitting status of the side indicator to be steady blue, and control the light-emitting status of the top light to be steady blue.

Step S210a is similar to step S206a, step S204a, and the like. Step S210b is similar to step S206b, step S204b, and the like. Refer to the foregoing descriptions of related steps. Details are not described herein again.

S211: When being removed from the charging port of the vehicle by the user, the charging connector 1 may return, to the charging control board, an indication that the connector is removed. The charging control board determines that the charging connector 1 is being removed, and performs the following step S212a and step S212b.

S212a: The charging control board controls the connector holder light 1 to switch to breathing in white at a light-emitting periodicity of 5s (a breathing-in-white state 1).

The charging control board generates a binary light control code d. The binary light control code d carries a binary character indicating that a light-emitting mode is breathing and a binary character indicating that a light-emitting color is white, and may further carry a binary character indicating that a light-emitting periodicity is 5s, to control the connector holder light 1 to switch to the breathing-in-white state 1. For detailed content of the process, refer to the foregoing related descriptions of FIG. 6. Details are not described herein again.

S212b: The charging control board sends a light-emitting status (the breathing-in-white state 1) of the connector holder light 1 to the terminal controller. Subsequently, the terminal controller controls the light-emitting status of the side indicator and the light-emitting status of the top light based on the light-emitting status of the charging connector 1.

The light-emitting status of the connector holder light 1 being the breathing-in-white state 1 may be represented by the binary light control code d.

The light-emitting status of the side indicator and the light-emitting status of the top light are results comprehensively determined based on light-emitting statuses of connector holder lights in the charging terminal. The terminal controller may determine, based on the binary light control code d, that the connector holder light 1 is idle. In this case, the charging terminal has an idle charging connector, and the terminal controller may control the light-emitting status of the side indicator to switch to being steady green, and control the light-emitting status of the top light to switch to being steady white. For detailed content of the process, refer to the foregoing descriptions of FIG. 4A to FIG. 4C and FIG. 6. Details are not described herein again.

S213: After being removed from the charging port of the vehicle by the user, the charging connector 1 disconnects from the charging control board. The charging control board is disconnected from the charging connector 1, determines that a status of the charging connector 1 is that the charging connector 1 is to be returned, and performs the following step S214a and step S214b.

S214a: The charging control board controls the connector holder light 1 to switch to breathing in white at a light-emitting periodicity of 3s (a breathing-in-white state 2).

S214b: The charging control board sends a light-emitting status (the breathing-in-white state 2) of the connector holder light 1 to the terminal controller. Subsequently, the terminal controller controls the light-emitting status of the side indicator and the light-emitting status of the top light based on the light-emitting status of the charging connector 1.

In step S214b, the terminal controller may control the light-emitting status of the side indicator to be steady green, and control the light-emitting status of the top light to be steady white.

Step S214a is similar to step S212a, and step S214b is similar to step S212b. Refer to the foregoing descriptions of related steps. Details are not described herein again.

Subsequently, the charging control board determines whether the connector is not returned 60s or more after the connector is removed.

If the charging connector is returned to the connector holder within 60s after being removed from the charging port of the vehicle, the following step S215a is performed.

S215a: The charging control board controls the connector holder light 1 to switch to blinking in green, and the charging control board sends a light-emitting status (blinking in green) of the connector holder light 1 to the terminal controller. Subsequently, the terminal controller controls the light-emitting status of the side indicator and the light-emitting status of the top light based on the light-emitting status of the connector holder light 1.

In step S215a, the terminal controller may control the light-emitting status of the side indicator to be steady green, and control the light-emitting status of the top light to be steady white.

Step S215a is similar to step S212a and step S212b, and only adaptive modification needs to be performed. Refer to the foregoing descriptions of related steps. Details are not described herein again.

If the charging connector is still not returned to the connector holder 60s or more after being removed from the charging port of the vehicle, the following step S215b is performed.

S215b: The charging control board controls the connector holder light 1 to switch to being steady white, and the charging control board sends a light-emitting status (steady white) of the connector holder light 1 to the terminal controller. Subsequently, the terminal controller controls the light-emitting status of the side indicator and the light-emitting status of the top light based on the light-emitting status of the charging connector 1.

In step S215b, the terminal controller may control the light-emitting status of the side indicator to be steady green, and control the light-emitting status of the top light to be steady white.

Step S215b is similar to step S212a and step S212b, and only adaptive modification needs to be performed. Refer to the foregoing descriptions of related steps. Details are not described herein again.

In some possible cases, the charging terminal may further display prompt information on the screen, to indicate an operation that the user is allowed to perform in a status of the charging terminal that is indicated by the top light. The prompt information may include a color presented by the top light and an operation that the user is allowed to perform in each color. For example, the prompt information may be "Light:Red:Stop;White:Charge;Blue:Wait", to notify the user that "red light indicates that charging is stopped, white light indicates that charging is in progress, and blue light indicates waiting".

In a manner, the prompt information may be directly displayed on the screen of the charging terminal. In this case, for an example user interface for displaying the prompt information, refer to a user interface shown in FIG. 8(1).

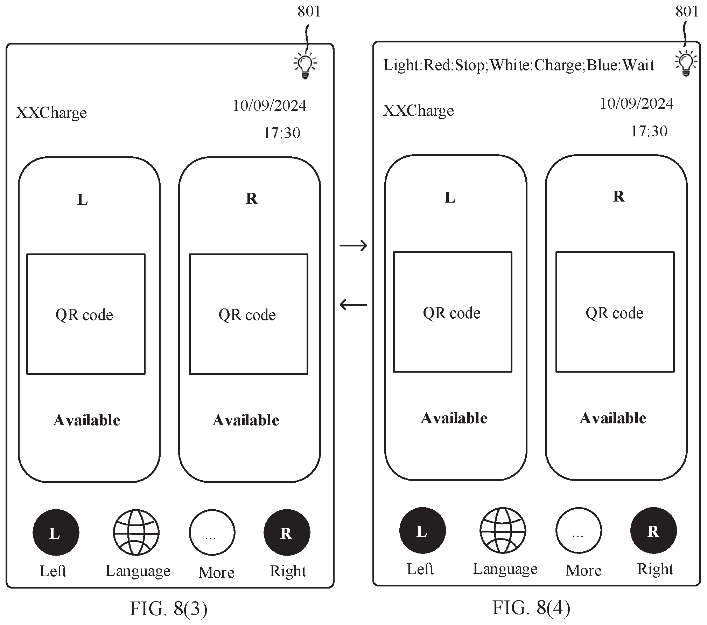

In a manner, the prompt information may be indirectly displayed on the screen of the charging terminal. In the case of indirect display, the user first sees a control for triggering display of the prompt information, instead of the prompt information. For an example control for triggering display of the prompt information, refer to a control 801 shown in FIG. 8(3) and FIG. 8(4). The charging terminal displays the prompt information only in response to an operation on the control 801. When the prompt information is displayed, if detecting an operation on the control 801 again, the charging terminal may hide the prompt information, and display only the control 801.

It should be further noted that the charging terminal shown in FIG. 5 is a split-type charging terminal. The split-type charging terminal means that a charging terminal and a charging host are two different devices. Through division based on a quantity of charging connectors, the split-type charging terminal may include a split-type single-connector terminal and a split-type multi-connector terminal. When including only two charging connectors, the split-type multi-connector terminal may also be referred to as a split-type dual-connector charging terminal.

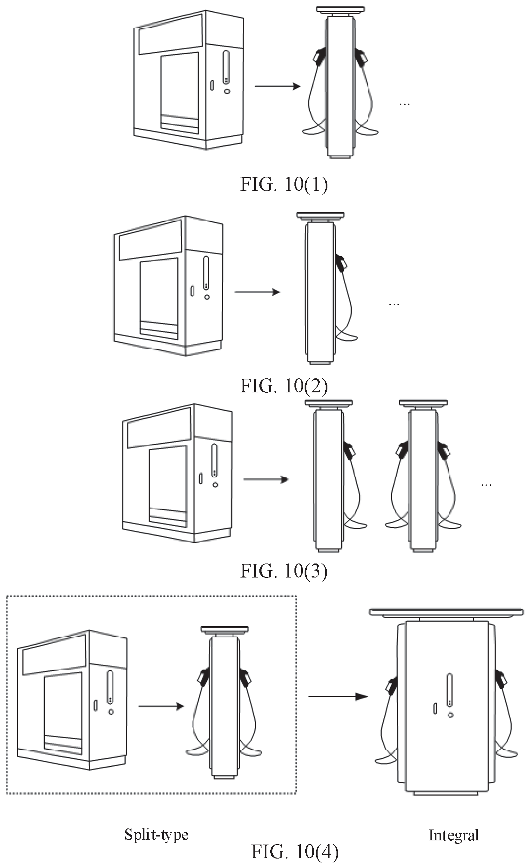

One split-type single-connector terminal or one split-type multi-connector terminal may be separately mounted to one charging host, or may be mounted to one charging host together with another split-type single-connector terminal and/or another split-type multi-connector terminal. As shown in FIG. 10(1), at least one split-type multi-connector terminal is allowed to be mounted to one charging host, and no split-type single-connector terminal is mounted to the charging host. As shown in FIG. 10(2), at least one split-type single-connector terminal is allowed to be mounted to one charging host, and no split-type dual-connector terminal is mounted to the charging host. As shown in FIG. 10(3), at least one split-type single-connector terminal and at least one split-type dual-connector terminal are allowed to be mounted to one charging host.

In addition to the split-type charging terminal, in an actual case, the charging terminal in embodiments of this application may alternatively be an integral charging terminal. As shown in FIG. 10(4), compared with the split-type charging terminal, the integral charging terminal means that a charging terminal and a charging host are a same device. The integral charging terminal has a function of the split-type charging terminal and a function of the charging host. Compared with the split-type charging terminal, the integral charging terminal has a larger size. Through division based on a quantity of charging connectors, the integral charging terminal may include an integral single-connector terminal and an integral multi-connector terminal. When including only two charging connectors, the integral multi-connector terminal may also be referred to as an integral dual-connector charging terminal.

Implementations of this application may be combined in any manner to achieve different technical effects.

In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

A person of ordinary skill in the art can understand that all or some of the processes of the methods in the foregoing embodiments may be implemented by a computer program instructing related hardware. The program may be stored in a computer-readable storage medium. When the program is executed, the processes of the foregoing method embodiments are performed. The foregoing storage medium includes any medium that can store program code, for example, a ROM, a random access memory RAM, a magnetic disk, or a compact disc.

To sum up, the foregoing descriptions are merely embodiments of the technical solutions of this application, but are not intended to limit the protection scope of this application. Any modification, equivalent replacement, improvement, or the like made based on the disclosure of this application shall fall within the protection scope of this application.

## Claims

1. A charging terminal, wherein the charging terminal comprises a top light and at least one charging connector, the top light is located at the top of the charging terminal, an illumination direction of the top light comprises a first direction and a second direction, the first direction is an orientation of a first side surface of the charging terminal, the second direction is an orientation of a second side surface of the charging terminal, a charging connector holder of the charging connector is disposed on the first side surface, and the second side surface comprises one or more side surfaces different from the first side surface, wherein
the top light is configured to indicate a status of the charging terminal, comprising: when the charging terminal is available for charging and has an unoccupied charging connector, the top light is in a first color or is off; when the charging terminal is available for charging but all charging connectors are occupied, the top light is in a second color; or when the charging terminal is unavailable for charging, the top light is in a third color or the second color, wherein that a charging connector is occupied comprises: the charging connector is plugged into a charging port of a vehicle, or the charging connector is in a charging socket but the charging connector is reserved for charging; and that the charging terminal is unavailable for charging comprises: the charging terminal is faulty, the charging terminal is being upgraded, or the charging terminal is in self-check.

2. The charging terminal according to claim 1, wherein when the charging terminal is available for charging and has an unoccupied charging connector, if ambient light intensity is less than preset intensity, the top light is in the first color; or when the charging terminal is available for charging and has an unoccupied charging connector, if the ambient light intensity is greater than or equal to the preset intensity, the top light is off.

3. The charging terminal according to claim 1 or 2, wherein the charging terminal further comprises a side indicator, and the side indicator is mounted on the first side surface, wherein
the side indicator is configured to indicate a status of the charging terminal, comprising: when the charging terminal is available for charging and has an unoccupied charging connector, the side indicator is in a fourth color; when the charging terminal is available for charging but all the charging connectors are occupied, the side indicator is in the second color; or when the charging terminal is unavailable for charging, the side indicator is in the third color or the second color.

4. The charging terminal according to any one of claims 1 to 3, wherein the at least one charging connector comprises a first charging connector, the charging terminal further comprises a charging connector holder and a connector holder light that correspond to the first charging connector, and the connector holder light is mounted on the charging connector holder, wherein
the charging connector holder is configured to fasten the first charging connector; and
the connector holder light is configured to indicate a status of the first charging connector, comprising: when the first charging connector is not occupied, the connector holder light is in the first color or the fourth color; when the first charging connector is occupied, the connector holder light is in the second color or the fourth color; or when the first charging connector is unavailable for charging, the connector holder light is in the third color or the second color.

5. The charging terminal according to claim 4, wherein the connector holder light is specifically configured to:
when the first charging connector is not reserved, be in different light-emitting statuses in different stages from a stage in which the first charging connector is in the charging connector holder to a stage in which the first charging connector is removed from the charging connector holder and then to a stage before the first charging connector is plugged into the charging port of the vehicle, wherein light-emitting colors of the connector holder light in all of the different light-emitting statuses are the first color; the different stages comprise at least two of the following: a stage in which the first charging connector is the charging connector holder and is not selected, a stage in which the first charging connector is in the charging connector holder and is selected, and a stage in which the first charging connector is removed from the charging connector holder and is not plugged into the charging port of the vehicle; and a difference between light-emitting statuses comprises a difference in at least one of the following: on/off duration, an on/off area, and an on/off position.

6. The charging terminal according to claim 5, wherein being in the different light-emitting statuses in the different stages from the stage in which the first charging connector is in the charging connector holder to the stage in which the first charging connector is removed from the charging connector holder and then to the stage before the first charging connector is plugged into the charging port of the vehicle specifically comprises:
being in a first light-emitting status in the stage in which the first charging connector is in the charging connector holder and is not selected;
switching from the first light-emitting status to a second light-emitting status when the first charging connector switches to the stage in which the first charging connector is in the charging connector holder and is selected; and
switching from the second light-emitting status to a third light-emitting status when the first charging connector switches to the stage in which the first charging connector is removed from the charging connector holder and is not plugged into the charging port of the vehicle.

7. The charging terminal according to claim 6, wherein the first light-emitting status is the same as a light-emitting status of the top light.

8. The charging terminal according to any one of claims 4 to 7, wherein the connector holder light is specifically configured to:
be in the fourth color when the first charging connector is plugged into the charging port of the vehicle and is in a first charging mode; or
be in the second color when the first charging connector is plugged into the charging port of the vehicle and is not in the first charging mode.

9. The charging terminal according to claim 8, wherein when the first charging connector is plugged into the charging port of the vehicle and is not in the first charging mode, a light-emitting status of the connector holder light is the same as the light-emitting status of the top light.

10. The charging terminal according to claim 9, wherein the charging terminal comprises a screen, and the charging terminal is configured to:
if determining that a logged-in user is an operation and maintenance user, display first prompt information on the screen when the first charging connector is plugged into the charging port of the vehicle and is not in the first charging mode, wherein different first prompt information is displayed in different stages; and the different stages comprise at least one of the following: the first charging connector is plugged into the charging port of the vehicle and has not entered a charging mode; the first charging connector enters a second charging mode; and the first charging connector exits the second charging mode and is not removed from the charging port of the vehicle.

11. The charging terminal according to any one of claims 4 to 10, wherein the connector holder light is specifically configured to:
be in different light-emitting statuses in different stages from a stage in which the first charging connector is removed from the charging port of the vehicle to a stage before the first charging connector is plugged back into the connector holder.

12. The charging terminal according to claim 11, wherein being in the different light-emitting statuses in the different stages from the stage in which the first charging connector is removed from the charging port of the vehicle to the stage before the first charging connector is plugged back into the connector holder specifically comprises:
being in the first color in a stage in which the first charging connector is removed from the charging port of the vehicle and is not plugged into the charging connector holder within preset time; or
being in the fourth color in a stage in which the first charging connector is removed from the charging port of the vehicle and is not plugged into the charging connector holder after the preset time.

13. The charging terminal according to any one of claims 4 to 11, wherein when the charging terminal is unavailable for charging, the light-emitting status of the connector holder light and a light-emitting status of the side indicator are the same as the light-emitting status of the top light.

14. The charging terminal according to claim 13, wherein the charging terminal is configured to:
when the charging terminal is unavailable for charging and the logged-in user is the operation and maintenance user, display second prompt information on the screen, wherein the second prompt information indicates a reason why the charging terminal is unavailable for charging.

15. The charging terminal according to claim 14, wherein the screen is further configured to display third prompt information, to indicate an operation that the user is allowed to perform in the status of the charging terminal that is indicated by the top light.
